(19) Europäisches Patentamt
European Patent Office
Office européen des brevets

(11) **EP 3 152 450 B1**

(12) **EUROPEAN PATENT SPECIFICATION**

(45) Date of publication and mention
of the grant of the patent:
**29.07.2020 Bulletin 2020/31**

(21) Application number: **15732297.5**

(22) Date of filing: **29.05.2015**

(51) Int Cl.:
***F16C 32/04*** (2006.01)

(86) International application number:
**PCT/FI2015/050378**

(87) International publication number:
**WO 2015/185799 (10.12.2015 Gazette 2015/49)**

(54) **A CONTROL DEVICE AND A METHOD FOR CONTROLLING A MAGNETIC LEVITATION SYSTEM**

STEUERUNGSVORRICHTUNG UND VERFAHREN ZUR STEUERUNG EINER
MAGNETSCHWEBEBAHN

DISPOSITIF DE COMMANDE ET PROCÉDÉ DE COMMANDE D'UN SYSTÈME DE LÉVITATION
MAGNÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.06.2014 FI 20145520**

(43) Date of publication of application:
**12.04.2017 Bulletin 2017/15**

(73) Proprietor: **Lappeenrannan-Lahden teknillinen
yliopisto LUT
53851 Lappeenranta (FI)**

(72) Inventors:
• **JASTRZEBSKI, Rafal**
  **FI-53851 Lappeenranta (FI)**
• **LINDH, Tuomo**
  **FI-53851 Lappeenranta (FI)**
• **PYRHÖNEN, Olli**
  **FI-53851 Lappeenranta (FI)**
• **SMIRNOV, Alexander**
  **FI-53851 Lappeenranta (FI)**

(74) Representative: **Finnpatent Oy
Smart Chemistry Park
Raisionkaari 55
21200 Raisio (FI)**

(56) References cited:
**DE-A1-102008 064 380     US-B1- 6 590 366**

• **CLAUDIUS M ZINGERLI ET AL: "Novel observer
based force control for active magnetic
bearings", 2010 INTERNATIONAL POWER
ELECTRONICS CONFERENCE : IPEC-SAPPORO
2010 - [ECCE ASIA] ; SAPPORO, JAPAN, IEEE,
PISCATAWAY, NJ, USA, 21 June 2010
(2010-06-21), pages 2189-2196, XP031729711,
ISBN: 978-1-4244-5394-8**
• **VISCHER D ET AL: "A NEW APPROACH TO
SENSORLESS AND VOLTAGE CONTROLLED
AMBS BASED ON NETWORK THEORY
CONCEPTS", PROCEEDINGS OF THE
INTERNATIONAL SYMPOSIUM ON MAGNETIC
BEARINGS, XX, XX, 12 July 1990 (1990-07-12),
pages 301-306, XP000197439,**
• **Charles Yang ET AL: "Optimal control of a
magnetic bearing without bias flux using finite
voltage", Optimal Control Applications and
Methods, 1 July 1998 (1998-07-01), pages
227-246, XP055210130, DOI:
10.1002/(SICI)1099-1514(199807/08)19:4<227 ::A
ID-OCA629>3.0.CO;2-V Retrieved from the
Internet:
URL:http://people.virginia.edu/~crk4y/pape
rs/bangbang.pdf**

**Description**

**Field of the invention**

The invention relates generally to a magnetic levitation system that can be, for example but not necessarily, an active magnetic bearing "AMB". More particularly, the invention relates to a control device and to a method for controlling a magnetic levitation system. Furthermore, the invention relates to a computer program for controlling a magnetic levitation system.

**Background**

Magnetic levitation systems, such as e.g. active magnetic bearings "AMB", are commonly known in the art - for example from Claudius M. Zingerli and Johann W. Kolar in "Novel Observer Based Force Control for Active Magnetic Bearings", 2010 International Power Electronics Conference: IPEC-Sapporo 2010. Magnetic levitation systems are commonly utilized for supporting a rotating or oscillating object. In many cases, the support at each direction is obtained by balancing attractive forces of two opposite acting magnets and other forces acting on an object to be levitated, where at least one of the magnets is a controllable electromagnet. In principle, it is also possible to balance an attractive force of one controllable electromagnet and other forces, e.g. the gravity force, acting against the attractive force of the electromagnet. The magnetic forces acting in all or some degrees of freedom of the levitated object, e.g. a rotor of an electrical machine, have to be controlled actively because of the inherent instability of the magnetic levitation. The instability is due to the fact that the magnetic attractive force acting between a magnet and an object made of e.g. ferromagnetic material increases when the air-gap between the magnet and the object gets smaller. There are several different kinds of magnetic levitation systems. Some systems use permanent magnets to generate bias magnetic fluxes, others use direct biasing currents to generate the bias fluxes. The biasing is used to overcome static loads, increasing the possible rates of change of magnetic forces and to linearize the magnetic force dependence on control variables.

The magnetic force generated by each electromagnet of a magnetic levitation system can be controlled by controlling the current of the electromagnet under consideration. By controlling the currents of all electromagnets of the magnetic levitation system, a resultant magnetic force can be generated into a desired direction. A control device of the magnetic levitation system constitutes typically an outer control loop and an inner control loop for each degree of freedom of the object to be levitated. The outer control loop receives information expressing the measured or estimated position, and possibly also the velocity, of the object to be levitated and a reference, i.e. desired, position of the object. The outer control loop produces reference values for the currents of the electromagnets acting in the degree of freedom under consideration. The inner control loop receives information expressing the reference values of the currents and the measured or estimated values of the currents. The inner control loop controls the voltages directed to the windings of the electromagnets so that the currents follow the reference values of the currents with a sufficient accuracy. The voltages can be controlled on the basis of the differences between the measured or estimated currents and the reference values of the currents for example with the pulse width modulation "PWM". Instead of the currents, the control quantities controlled by the inner control loop can be estimated or measured magnetic fluxes generated by the electromagnets or estimated or measured forces directed by the electromagnets to the object to be levitated.

The above-described control principle is, however, not free from challenges. One of the challenges is related to delays created by the outer and inner control loops. The outer control loop has to be tuned to alter the reference values of the currents or other control quantities so slowly that the inner control loop is able to make the currents or other control quantities to follow the changes of the reference values with a sufficient accuracy. If the outer control loop is too fast, i.e. the outer control loop changes the reference values too fast, the differences between the prevailing currents or other control quantities and the reference values may get so big that the position control represented by the outer control loop gets instable. Therefore, as usual in cases having outer and inner control loops, the outer control loop has to be sufficiently slower than the inner control loop. The ability of the inner control loop to generate fast changes in the currents and as well in the forces and in the magnetic fluxes is inherently limited by the inductances of the electromagnets and the upper limits of the available voltages. On the other hand, the outer control loop has to be sufficiently fast in order to provide a sufficiently stiff magnetic suspension. Therefore, it can be quite challenging to construct the outer control loop so that the changes in the reference values of the currents or other control quantities are slow enough for the inner control loop to follow but, on the other hand, the changes are fast enough so as to provide a sufficiently stiff magnetic suspension.

**Summary**

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new method for controlling a magnetic levitation system that can be, for example but not necessarily, an active magnetic bearing "AMB". A method according to the invention comprises:

- receiving a position signal indicative of a position of an object levitated by one or more magnetic fluxes, and

- controlling one or more voltages directed to one or more windings of the magnetic levitation system on the basis of a deviation of the position of the object from a reference position so as to control the resultant magnetic force directed to the object.

The one or more voltages are controlled by:

- selecting, for each of temporally successive control periods, a control direction so that changing the resultant magnetic force in the selected control direction improves ability of a total force acting on the object to decrease the deviation of the position, and

- setting, for each of the temporally successive control periods, the one or more voltages in accordance with the selected control direction so as to decrease the deviation of the position by changing the resultant magnetic force with the aid of the one or more voltages.

The above-mentioned control direction is selected from among a set of selectable control directions, and a voltage value of each of the above-mentioned one or more voltages is selected from among a set of selectable voltage values in accordance with the selected control direction.

In the above-described method, the one or more voltages are controlled without a need to form one or more reference values which have to react fast enough to changes in loading conditions in order to provide a sufficiently stiff magnetic suspension, but whose changes have to be slow enough in order to keep the differences between the reference values and the corresponding control quantities, e.g. currents, fluxes, or forces, sufficiently small so as to maintain stability of the magnetic suspension.

The magnetic levitation system can be for example an axial magnetic bearing for supporting an object, e.g. a rotor of an electrical machine, in mutually opposite directions parallel with the axis of rotation of the object. In this case, there are two possible control directions which are mutually opposite to each other. For another example, the magnetic levitation system can be a radial magnetic bearing for supporting an object, e.g. a rotor of an electrical machine, in directions perpendicular to the axis of rotation of the object. In this case, the possible control directions are in a geometric plane perpendicular to the axis of rotation. For a third example, the magnetic levitation system may comprise one or more radial magnetic bearings and one or more axial magnetic bearings. In this case, the magnetic bearings are advantageously controlled separately. For a fourth example, the magnetic levitation system may comprise conical magnetic bearings capable of supporting a rotating object both in the radial directions and in the axial directions.

It is worth noting that also in a case where the magnetic levitation system comprises only one controllable electromagnet for supporting an object against downwards directed loading including the gravity force, there are two possible control directions. One of the control directions is upwards and the other is downwards. If the object is at a position higher than the reference position, the magnetic force directed to the object is changed in the downward control direction, i.e. the upward directed magnetic force is weakened and thus the change of the magnetic force is downwards. This change of the magnetic force improves the ability of the total force acting on the object and including the magnetic force and the gravity force to move the object towards the reference position.

In accordance with the invention, there is provided also a new control device for controlling a magnetic levitation system that can be, for example but not necessarily, an active magnetic bearing "AMB". A control device according to the invention comprises:

- a signal input for receiving a position signal indicative of a position of an object levitated by one or more magnetic fluxes, and

- a controller for controlling one or more voltages directed to one or more windings of the magnetic levitation system on the basis of a deviation of the position of the object from a reference position so as to control a resultant magnetic force directed to the object.

The controller is configured to:

- select, for each of temporally successive control periods, a control direction so that changing the resultant magnetic force in the selected control direction improves ability of a total force acting on the object to decrease the deviation of the position, and

- set, for each of the temporally successive control periods, the one or more voltages in accordance with the selected control direction so as to decrease the deviation of the position by changing the resultant magnetic force with the aid of the one or more voltages.

The controller is configured to select the control direction from among a set of selectable control directions and to select, for each of the one or more voltages, a voltage value from among a set of selectable voltage values in accordance with the selected control direction.

In accordance with the invention, there is provided also a new magnetic levitation system that comprises:

- at least one magnetic actuator comprising one or more windings for generating one or more magnetic fluxes for levitating an object,

- equipment for generating a position signal indicative of a position of the object with respect to the magnetic actuator,

- one or more controllable voltage sources for directing one or more voltages to the one or more windings, and

- a control device according to the invention for controlling the one or more voltages on the basis of a deviation of the position of the object from a reference position so as to control the one or more magnetic fluxes to levitate the object.

In accordance with the invention, there is provided also a new computer program for controlling one or more voltages directed to one or more windings of a magnetic levitation system so as to control a resultant magnetic force directed to an object to be levitated.

A computer program according to the invention comprises computer executable instructions for controlling a programmable processing system of the magnetic levitation system to:

- select, for each of temporally successive control periods, a control direction so that changing the resultant magnetic force in the selected control direction improves ability of a total force acting on the object to decrease the deviation of the position, and

- set, for each of the temporally successive control periods, the one or more voltages in accordance with the selected control direction so as to decrease the deviation of the position by changing the resultant magnetic force with the aid of the one or more voltages.

The computer program comprises computer executable instructions for controlling the programmable processing system to:

- select the control direction from among a set of selectable control directions, and

- select, for each of the one or more voltages, a voltage value from among a set of selectable voltage values in accordance with the selected control direction.

In accordance with the invention, there is provided also a new computer program product. The computer program product comprises a non-volatile computer readable medium, e.g. an optical disc, encoded with a computer program according to the invention.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

**Brief description of the figures**

Exemplifying and non-limiting embodiments of the invention and their advantages are explained in greater detail below in the sense of examples and with reference to the accompanying drawings, in which:

figure 1a shows a schematic illustration of a magnetic levitation system comprising a control device according to an exemplifying and non-limiting embodiment of the invention,

figure 1b shows a diagram illustrating an exemplifying set of control directions suitable for being used in the control of the magnetic levitation system illustrated in figure 1a,

figures 1c and 1d show functional block diagrams of control devices according to exemplifying and non-limiting embodiments of the invention for controlling a magnetic levitation system,

figure 2 shows a schematic illustration of a magnetic levitation system comprising a control device according to an exemplifying and non-limiting embodiment of the invention,

figure 3a shows a flowchart of a method according to an exemplifying and non-limiting embodiment of the invention for controlling a magnetic levitation system, and

figure 3b illustrates exemplifying sub-actions for carrying out one of the actions of a method according to an exemplifying and non-limiting embodiment of the invention.

**Description of exemplifying and non-limiting embodiments**

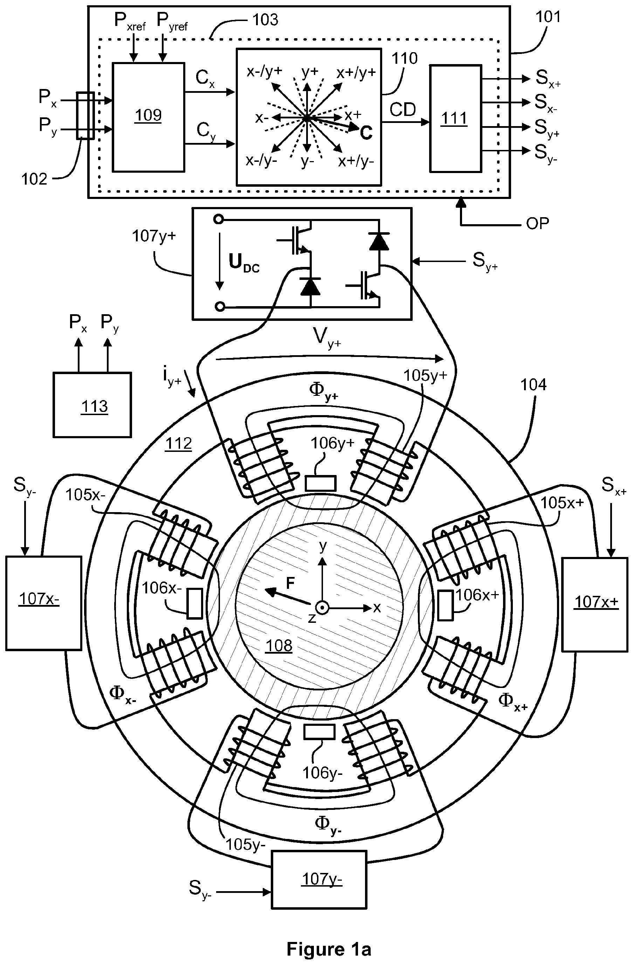

Figure 1a shows a schematic illustration of a magnetic levitation system comprising a control device 101 according to an exemplifying and non-limiting embodiment of the invention. In the exemplifying case illustrated in figure 1a, the magnetic levitation system is a radial magnetic bearing for supporting an object 108 in directions perpendicular to an axis of rotational symmetry of the object. Figure 1a shows a section view of the object 108. The axis of the rotational symmetry is parallel with the z-axis of the coordinate system shown in figure 1a. The object 108 to be levitated can be for example a rotor or an electrical machine. The magnetic levitation system comprises a magnetic actuator 104 constituting electromagnets for magnetically supporting the object 108. The magnetic actuator 104 comprises a ferromagnetic core structure 112 and windings 105x+, 105x-, 105y+ and 105y- for generating magnetic fluxes $\Phi_{x+}$, $\Phi_{x-}$, $\Phi_{y+}$ and $\Phi_{y-}$ for supporting the object 108 in the xy-plane of the coordinate system. The magnetic levitation system comprises equipment for generating a position signal indicative of a position of the object 108 with respect to the magnetic actuator 104. In this exemplifying case, the position signal comprises components $P_x$ and $P_y$, where $P_x$ is indicative of the x-coordinate of the rotational symmetry axis of the object 108 and $P_y$ is indicative of the y-coordinate of the rotational symmetry axis of the object. Thus, in this exemplifying case, the position signal constitutes a position vector $\mathbf{P} = P_x\mathbf{e}_x + P_y\mathbf{e}_y$ expressing the position of the object 108 in a planar two-dimensional coordinate system, i.e. in the xy-plane, whose origin is at a reference position of the object, i.e. at the desired position of the object. The $\mathbf{e}_x$ and $\mathbf{e}_y$ are unit vectors defining the positive x- and y-directions of the coordinate system shown in figure 1a.

In the exemplifying case illustrated in figure 1a, the equipment for generating the position signal comprises sensors 106x+, 106x-, 106y+ and 106y- and a circuitry 113 for generating the components $P_x$ and $P_y$ of the position signal on the basis of output signals of the sensors. Signal transfer paths from the sensors to the circuitry 113 are not shown in figure 1a. The sensors 106x+, 106x-, 106y+ and 106y- can be, for example but not necessarily, inductive sensors where the inductance of each sensor is dependent on the distance from the sensor under consideration to the surface of the object 108, and the circuitry 113 can be configured to form the components $P_x$ and $P_y$ of the position signal on the basis of differences between the inductances of the sensors. It is also possible that the circuitry 113 is configured to form the components $P_x$ and $P_y$ of the position signal on the basis of differences between the inductances of the electromagnets supporting the object 108. The inductance of each electromagnet can be indicated by a rate of change of current di/dt when voltage directed to the winding of the electromagnet under consideration is changed in a step-wise manner. In this case, there is no need for the sensors 106x+, 106x-, 106y+ and 106y-.

The magnetic levitation system comprises controllable voltage sources 107x+, 107x-, 107y+ and 107y- for directing controllable voltages to the windings 105x+, 105x-, 105y+ and 105y-. In the exemplifying magnetic levitation system illustrated in figure 1a, the voltage sources are three-level voltage sources each of which is capable of producing three discrete voltage values. The main circuit of the voltage source 107y+ is presented in figure 1a. Each of the other voltage sources 107x+, 107x- and 107y- has a main circuit similar to that of the voltage source 107y+. As can be seen from the main circuit of the voltage source 107y+, voltage $V_{y+}$ directed to the winding 105y+ is substantially $U_{DC}$ when both transistors of the voltage source 107y+ are conductive, substantially $-U_{DC}$ when both of the transistors are non-conductive and current $i_{y+}$ flows via diodes of the voltage source 107y+, and substantially zero when one of the transistors is conductive and the other is non-conductive and the current flows via the conductive transistor and one of the diodes. Conductive state threshold voltages of the transistors and the diodes and resistances of conductors make the voltage $V_{y+}$ to slightly differ from the above-mentioned values. The voltage sources are controlled by three-level voltage selectors $S_{x+}$, $S_{x-}$, $S_{y+}$ and $S_{y-}$ so that for example voltage selector $S_{y+}$ determines whether the voltage $V_{y+}$ is positive, negative, or substantially zero.

The magnetic levitation system comprises a control device 101 for controlling the magnetic actuator 104. The control device comprises a signal input 102 for receiving the components $P_x$ and $P_y$ of the position signal, and a controller 103 for controlling the voltages directed to the windings 105x+, 105x-, 105y+ and 105y- in a time-discrete way at temporally successive control periods. The voltages are controlled on the basis of the deviation between the position of the object 108 and the reference position of the object. In this case, the components $P_x$ and $P_y$ of the position signal represents the deviation of the position because the origin of the coordinate system shown in figure 1a coincides with the reference position. Thus, reference values $P_{xref}$ and $P_{yref}$ of the components $P_x$ and $P_y$ of the position signal can be assumed to be zeroes. The controller 103 comprises a functional section 109 for producing, for each of the temporally successive control periods, control values $C_x$ and $C_y$ at least partly on the basis of the components $P_x$ and $P_y$ of the position signal. The control values $C_x$ and $C_y$ represent a control vector $\mathbf{C} = C_x\mathbf{e}_x + C_y\mathbf{e}_y$ which indicates a direction in which a resultant magnetic force F directed to the object 108 should be changed in order to decrease the deviation of the position. The resultant magnetic force is the resultant of the magnetic forces directed to the object 108 by the magnetic fluxes $\Phi_{x+}$, $\Phi_{x-}$, $\Phi_{y+}$ and $\Phi_{y-}$. Thus, the resultant magnetic force F is $(F_{x+} - F_{x-})\mathbf{e}_x + (F_{y+} - F_{y-})\mathbf{e}_y$, where $F_{x+}$ is the magnetic force caused by the magnetic flux $\Phi_{x+}$, $F_{x-}$ is the magnetic force caused by the flux $\Phi_{x-}$, $F_{y+}$ is the magnetic force caused by the magnetic flux $\Phi_{y+}$, and $F_{y-}$ is the magnetic force caused by the flux $\Phi_{y-}$. The magnetic force caused by, for example, the flux $\Phi_{y+}$ is directly proportional to the square of the magnetic flux $\Phi_{y+}^2$. Thus, the rate of change $dF_{y+}/dt$ of the magnetic force $F_{y+}$ is directly proportional to $2\Phi_{y+} \times d\Phi_{y+}/dt$ which, in turn, is directly proportional to $2\Phi_{y+} \times (V_{y+} - R\, i_{y+})$, where R is the resistance of the winding 105y+ and $i_{y+}$ is the current of the winding 105y+. Thus, the rate of change vector dF/dt of the resultant magnetic force F is proportional to the following vector:

$$d\mathbf{F}/dt \sim (2\Phi_{x+} \times V_{x+} - 2\Phi_{x-} \times V_{x-})\mathbf{e}_x + (2\Phi_{y+} \times V_{y+} - 2\Phi_{y-} \times V_{y-})\mathbf{e}_y, \qquad (1)$$

where the effect of the resistances of the windings is neglected, and $V_{x+}$, $V_{x-}$ and $V_{y-}$ are the voltages directed to the windings 105x+, 105x- and 105y-, respectively. As indicated by Equation (1), the direction of change of the resultant magnetic force **F** can be controlled with the aid of the voltages directed to the windings 105x+, 105x-, 105y+ and 105y-.

The controller 103 comprises a functional section 110 for selecting, for each of the temporally successive control periods, a control direction CD so that changing the resultant magnetic force **F** in the selected control direction improves the ability of the resultant magnetic force to decrease the deviation of the position. The controller 103 comprises a functional section 111 for setting, for each of the temporally successive control periods, the voltages $V_{x+}$, $V_{x-}$, $V_{y+}$ and $V_{y-}$ in accordance with the selected control direction CD so as to decrease the deviation of the position by changing the resultant magnetic force with the aid of the voltages. In this exemplifying case, a value of each of the voltages $V_{x+}$, $V_{x-}$, $V_{y+}$ and $V_{y-}$ is selected from a finite set of selectable voltage values, i.e. $\approx +U_{DC}$, $\approx 0$, $\approx -U_{DC}$, and the selection is accomplished by setting appropriate values to the voltage selectors $S_{x+}$, $S_{x-}$, $S_{y+}$ and $S_{y-}$. The functional section 111 can be implemented for example with the aid of a selection look-up table for outputting the voltage selectors $S_{x+}$, $S_{x-}$, $S_{y+}$ and $S_{y-}$ on the basis of a look-up key comprising an indicator of the selected control direction CD. As the value of each of the voltages $V_{x+}$, $V_{x-}$, $V_{y+}$ and $V_{y-}$ is selected from the finite set of selectable voltage values, there are only a finite number of selectable voltage combinations which correspond to different control directions. Therefore, the control direction CD cannot be selected freely but the control direction is selected from a finite set of selectable control directions. In cases where voltages are continuously controllable, the control direction can be selected more freely.

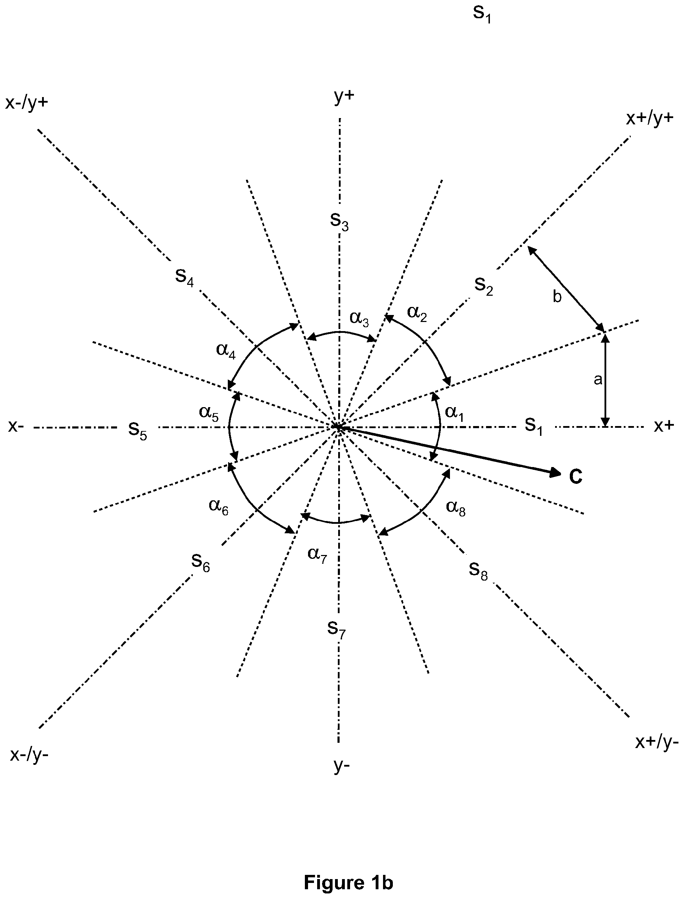

Figure 1b shows a diagram illustrating an exemplifying set of selectable control directions in the xy-plane of the coordinate system shown in figure 1a. In figure 1b, the selectable control directions are defined by first geometric lines intersecting each other at the origin and depicted with dot-and-dash lines. For example, the selectable control direction x+ corresponds to a situation where $V_{x+} \approx U_{DC}$ and $V_{x-} \approx V_{y+} \approx V_{y-} \approx 0$ or where $V_{x+} \approx U_{DC}$ and $V_{x-} \approx -U_{DC}$ and $V_{y+} \approx V_{y-} \approx 0$, and the selectable control direction x+/y+ corresponds to a situation where $V_{x+} \approx U_{DC}$, $V_{y+} \approx U_{DC}$ and $V_{x-} \approx V_{y-} \approx 0$ or where $V_{x+} \approx U_{DC}$, $V_{y+} \approx U_{DC}$, $V_{x-} \approx -U_{DC}$, $V_{y-} \approx -U_{DC}$. It is worth noting that all the possible control directions are not shown in figure 1b. For example, a voltage combination $V_{x+} \approx U_{DC}$, $V_{y+} \approx U_{DC}$, $V_{x-} \approx -U_{DC}$, $V_{y-} \approx 0$ corresponds to a control direction that is between the control directions x+ and x+/y+. The xy-plane is divided into sectors $s_1$, $s_2$, $s_3$,

$s_4$, $s_5$, $s_6$, $s_7$, and $s_8$ by second geometric lines intersecting each other at the origin so that each of the selectable control directions belongs to one of the sectors and a symmetry line of each sector is one of the selectable control directions. In figure 1b, the second geometric lines are depicted with dashed lines. The central angles $\alpha_1$, $\alpha_2$, $\alpha_3$, $\alpha_4$, $\alpha_5$, $\alpha_6$, $\alpha_7$ and $\alpha_8$ of the sectors are advantageously proportional to magnitudes, i.e. the Euclidean norm, of sector-specific voltage vectors so that a greater magnitude of the sector-specific voltage vector corresponds to a greater central angle of the corresponding sector. Each of the above-mentioned sector-specific voltage vectors is a vector of the voltages corresponding to the control direction related to the sector under consideration. For example, the sector specific voltage vector of the sector $s_1$ is $\approx (U_{DC})\mathbf{e}_x$ or $\approx (2U_{DC})\mathbf{e}_x$ and the sector specific voltage vector of the sector $s_1$ is $\approx (U_{DC})\mathbf{e}_x + (U_{DC})\mathbf{e}_y$ or $\approx (2U_{DC})\mathbf{e}_x + (2U_{DC})\mathbf{e}_y$. The central angles $\alpha_1$-$\alpha_8$ of the sectors $s_1$-$s_8$ can be proportional to the magnitudes of sector-specific voltage vectors for example so that the distances a and b shown in figure 1b are directly proportional to the magnitudes of the sector specific voltage vectors. In this case, the ratio $\sin(\alpha_i/2)/V_i$ is the same for all of the sectors, where $\alpha_i$ is the central angle of the i:th sector, $V_i$ is the magnitude of the sector-specific voltage vector related to i:th the sector, and $i = 1, 2, ..., 8$.

As mentioned earlier, the functional section 111 of the control device 101 can be implemented with the aid of a selection look-up table for outputting the voltage selectors $S_{x+}$, $S_{x-}$, $S_{y+}$ and $S_{y-}$ on the basis of a look-up key comprising an indicator of the selected control direction. The selection look-up table can be for example according to Table 1 shown below. In Table 1, '+' means that $\approx +U_{DC}$ is directed to the winding under consideration, '0' means that $\approx$ zero voltage is directed to the winding, and '-' means that $\approx -U_{DC}$ is directed to the winding. The row of table 1 is determined on the basis of the control direction and the column is determined according to the winding under consideration. The control directions are denoted in the same way as in figure 1b.

Table 1. An exemplifying selection look-up table.

| | Winding | | | |
|---|---|---|---|---|
| **Control direction** | 105x+ | 105y+ | 105x- | 105y- |
| x+ | + | 0 | - | 0 |
| y+ | 0 | + | 0 | - |
| x- | - | 0 | + | 0 |
| y- | 0 | - | 0 | + |
| x+/y+ | + | + | - | - |
| x-/y+ | - | + | + | - |
| x+/y- | + | - | - | + |
| x-/y- | - | - | + | + |

In a control device according to an exemplifying and non-limiting embodiment of the invention, the functional section 109 shown in figure 1a is configured to set the direction of the control vector $\mathbf{C} = C_x\mathbf{e}_x + C_y\mathbf{e}_y$ to be opposite to the direction of the position vector $\mathbf{P} = P_x\mathbf{e}_x + P_y\mathbf{e}_y$, i.e. $\mathbf{C} = - q\,\mathbf{P}$, where q is a positive real number. The functional section 110 of the control device is configured to determine a particular one of the sectors $s_1$-$s_8$ to which the control vector $\mathbf{C}$ belongs and to select the control direction which belongs to the determined sector. Thereafter, the functional section 111 of the control device selects the appropriate sector-specific voltage vector. In this case, the resultant magnetic force $\mathbf{F}$ is attempted to be changed against the direction of the deviation of the position at each of the temporally successive control periods. In the exemplifying situation illustrated in figure 1b, the control vector $\mathbf{C}$ belongs to the sector $s_1$ and thus the sector specific voltage vector is $\approx (U_{DC})\mathbf{e}_x$, i.e. $V_{x+} \approx U_{DC}$ and $V_{x-} \approx V_{y+} \approx V_{y-} \approx 0$, or the sector specific voltage vector is $\approx (2U_{DC})\mathbf{e}_x$ i.e. $V_{x+} \approx U_{DC}$ and $V_{x-} \approx - U_{DC}$ and $V_{y+} \approx V_{y-} \approx 0$.

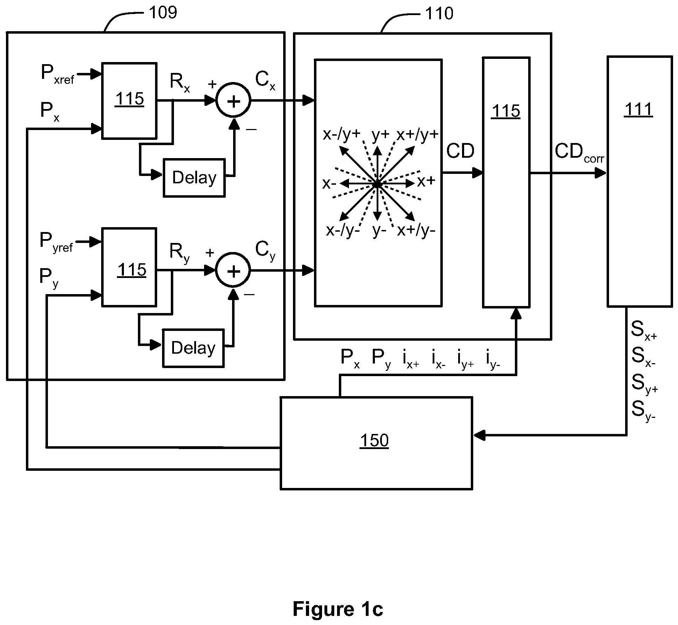

Figure 1c shows a functional block diagram of the control device 101 shown in figure 1a in a case according to an exemplifying and non-limiting embodiment of the invention. In figure 1c, the magnetic actuator, the controllable voltage sources, and the equipment for providing the components $P_x$ and $P_y$ of the position signal are depicted with a block 150. The functional section 109 is configured to produce, for each of the temporally successive control periods, the control values $C_x$ and $C_y$ at least partly on the basis of the components $P_x$ and $P_y$ of the position signal. The control values $C_x$ and $C_y$ represent the control vector $\mathbf{C} = C_x\mathbf{e}_x + C_y\mathbf{e}_y$ which indicates the direction in which the resultant magnetic force $\mathbf{F}$ directed to the object 108 should be changed in order to decrease the deviation of the position. The functional section 109 is configured to use a predetermined rule for producing a reference vector $\mathbf{R} = R_x\mathbf{e}_x + R_y\mathbf{e}_y$ on the basis of the position vector $\mathbf{P} = P_x\mathbf{e}_x + P_y\text{-}\mathbf{e}_y$. The reference vector $\mathbf{R}$ may represent for example a desired resultant magnetic force $\mathbf{F}$ or desired values of some other control quantities defining the operation of the magnetic levitation system, such as e.g. a vector of balances of squares of the currents $(i_{x+}^2 - i_{x-}^2)\mathbf{e}_x + (i_{y+}^2 - i_{y-}^2)\mathbf{e}_y$, where $i_{x+}$, $i_{x-}$, $i_{y+}$ and $i_{y-}$ are the currents of the windings 105x+, 105x-, 105y+ and 105y-, respectively. The use the predetermined rule for producing the reference vector is depicted with blocks 115 in figure 1c. The predetermined rule may comprise for example a proportional and integrative "PI" control algorithm, a proportional, integrative, and derivative "PID" control algorithm, a proportional and derivative "PD" control algorithm, or some other suitable control algorithm. The functional section 109 is configured to subtract, from the reference vector, the previous reference vector corresponding to the previous one of the temporally successive control periods so as to produce the control vector $\mathbf{C} = C_x\mathbf{e}_x + C_y\mathbf{e}_y$. This approach is based on the assumption that the prevailing values of the control quantities corresponding to the reference vector have reached their reference values by the end of the previous control period, and thus the previous reference vector can be used as an estimate for the control quantities prevailing at the beginning this the control period. The functional section 110 is configured to determine a particular one of the above-mentioned sectors $s_1$-$s_8$, figure 1b, to which the control vector $\mathbf{C}$ belongs and to select the control direction CD which belongs to the determined sector. Thereafter, the functional section 111 of the control device selects the appropriate sector-specific voltage vector.

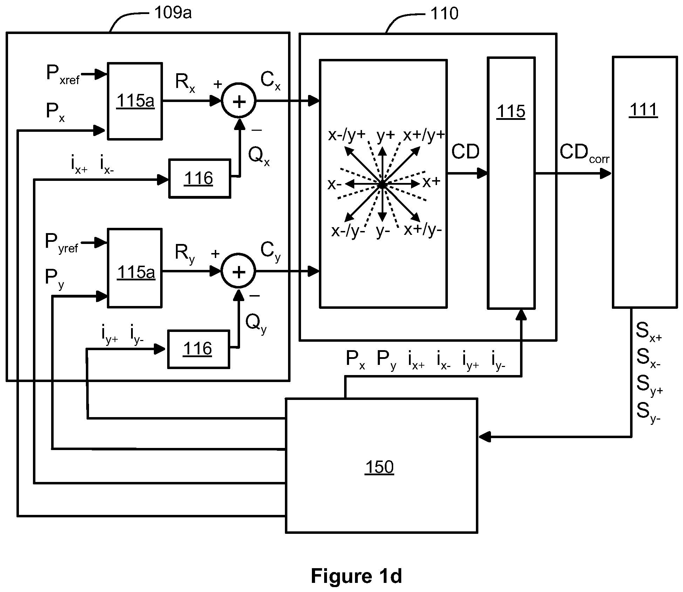

Figure 1d shows a functional block diagram of the control device 101 shown in figure 1a in a case according to an exemplifying and non-limiting embodiment of the invention. Except for a functional section 109a, the functional block diagram shown in figure 1c is similar to the functional block diagram shown in figure 1c. The functional section 109a is configured to use a predetermined rule for producing a reference vector $\mathbf{R} = R_x\mathbf{e}_x + R_y\mathbf{e}_y$ on the basis of the position vector $\mathbf{P} = P_x\mathbf{e}_x + P_y\mathbf{e}_y$. The reference vector $\mathbf{R}$ may represent for example a desired resultant magnetic force $\mathbf{F}$ or desired values of some other control quantities defining the operation of the magnetic levitation system, such as e.g. a vector of balances of squares of the currents $(i_{x+}^2 - i_{x-}^2)\mathbf{e}_x + (i_{y+}^2 - i_{y-}^2)\mathbf{e}_y$, where $i_{x+}$, $i_{x-}$, $i_{y+}$ and $i_{y-}$ are the currents of the windings of the magnetic levitation system. The use of the predetermined rule for producing the reference vector is depicted with blocks 115a in figure 1d. Also in this case, the predetermined rule may comprise for example a proportional and integrative "PI" control algorithm, a proportional, integrative, and derivative "PID" control algorithm, a proportional and derivative "PD" control algorithm, or some other suitable control algorithm. The functional section 109a is configured to subtract, from the reference vector $\mathbf{R}$, a vector $\mathbf{Q} = Q_x\mathbf{e}_x + Q_y\mathbf{e}_y$ indicative of the prevailing resultant magnetic force $\mathbf{F}$ or other control quantities defining the operation of the magnetic levitation system, such as e.g. the vector of balances of squares of the currents $(i_{x+}^2 - i_{x-}^2)\mathbf{e}_x + (i_{y+}^2 - i_{y-}^2)\mathbf{e}_y$. In this exemplifying case, the vector $\mathbf{Q}$ is derived on the basis of information indicative of the prevailing currents of the windings. Functional blocks 116 shown in figure 1d represent the derivation of the vector $\mathbf{Q}$. The information indicative of the prevailing currents comprises measured or estimated values of the currents. In principle, the vector $\mathbf{Q}$ could as well be based on measured or estimated magnetic forces or measured or estimated magnetic fluxes.

The above-described control principles are based on the assumption that direction of change of the resultant magnetic force F is sufficiently close to the direction of the following voltage vector:

$$\mathbf{V} = (V_{x+} - V_{x-})\mathbf{e}_x + (V_{y+} - V_{y-})\mathbf{e}_y, \qquad\qquad (2)$$

As presented earlier in Equation (1), the rate of change vector dF/dt of the resultant magnetic force F is proportional to the following vector:

$$d\mathbf{F}/dt \sim (2\Phi_{x+} \times V_{x+} - 2\Phi_{x-} \times V_{x-})\mathbf{e}_x + (2\Phi_{y+} \times V_{y+} - 2\Phi_{y-} \times V_{y-})\mathbf{e}_y,$$

As can be seen, the direction of the voltage vector $\mathbf{V}$ is the direction of the change of the resultant magnetic force $\mathbf{F}$, i.e. the angle between $\mathbf{V}$ and dF/dt is zero, if the magnetic fluxes $\Phi_{x+}$, $\Phi_{x-}$, $\Phi_{y+}$ and $\Phi_{y-}$ are mutually equal, i.e. $\Phi_{x+} = \Phi_{x-} = \Phi_{y+} = \Phi_{y-}$. Although this assumption is applicable in many cases, there can be situations where the quality of the control can be improved by using a more accurate model for selecting the voltages directed to the windings of the magnetic levitation system.

In a control device according to an exemplifying and non-limiting embodiment of the invention, the functional section 110 is configured to maintain a correction model for correcting the selection of the control direction. The correction model is depicted with a block 115 in figures 1c and 1d. The correction model contains information about characteristics of magnetic circuits of the magnetic levitation system and is configured to receive input information indicative of the selected control direction CD, the prevailing currents $i_{x+}$, $i_{x-}$, $i_{y+}$ and $i_{y-}$ of the windings, and the position vector $\mathbf{P} = P_x\mathbf{e}_x + P_y\mathbf{e}_y$ of the object. The correction model can be implemented for example with the aid of a correction look-up table whose content values can be generated for example by inspecting, e.g. with simulations, how the directions of the vectors $\mathbf{V}$ and dF/dt deviate from each other at different values of the currents and at different positions of the object. With the aid of the correction model it is possible take into account factors related to e.g. the geometric shapes of the magnetic circuits, the magnetic saturation, and the effect of the position of the object to be levitated on the generation of the magnetic forces.

A control device according to an exemplifying and non-limiting embodiment of the invention is configured to determine a temporal length of each of the temporally successive control periods on the basis of (i) the control values $C_x$ and $C_y$ indicating the required changes of the control quantities being controlled, e.g. the x- and y-components of the resultant magnetic force **F,** and (ii) a fact that the voltages set for the control period under consideration at least partly determine a rate of change of each of the control quantities under consideration. In many cases this approach reduces the switching frequency of the voltage sources because switching is made only when needed. For example the functional entity 111 which selects the voltages can be provided with computing capacity for determining the temporal lengths of the control periods. A simpler and more straightforward approach is to use control periods having a constant temporal length.

A control device according to an exemplifying and non-limiting embodiment of the invention is configured to keep, in order to reduce the switching frequency, the voltages unchanged in response to a situation in which a vector norm of the control vector **C** = $C_x\mathbf{e}_x$ + $C_y\mathbf{e}_y$ indicating the required changes of the control quantities is below a predetermined limit. The vector norm can be for example the Euclidean norm or some other suitable vector norm.

In many magnetic levitation systems, the windings constitute one or more mutually non-overlapping winding groups so that the windings belonging to a same winding group are capable of generating mutually cancelling components of the resultant magnetic force. The meaning of the term "mutually non-overlapping" is that each winding belongs to only one winding group, i.e. none of the winding belongs to two or more winding groups. For example, in the exemplifying magnetic levitation system illustrated in figure 1a, the windings 105x+ and 105x- constitute a first winding group and the windings 105y+ and 105y- constitute a second winding group. As the windings belonging to a same winding group are capable of generating mutually cancelling magnetic forces, the resultant magnetic force does not change when the magnetic forces generated by these windings are all changed by a same amount. For example, if the magnetic forces generated by the windings 105x+ and 105x- are both increased or decreased by $\Delta F$, the resultant magnetic force F remains unchanged. The same is valid for the windings 105y+ and 105y- too. Therefore, the currents of the windings 105x+ and 105x- can both be increased or decreased so that the resultant magnetic force **F** remains unchanged. The same is valid also for the currents of the windings 105y+ and 105y-. Therefore, the same resultant magnetic force **F** can be achieved at different operating points of the currents of the windings. In other words, in a situation where there is a desired resultant magnetic force **F,** the operating points of the currents can be on a desired area but, as well, the operating points of the currents can be outside the desired area. In many cases, there is a need to ensure that the operating points of the currents are kept on the desired area because unnecessarily high currents cause significant losses and unnecessarily low currents may lead to a situation where control stops working when one of the currents drops too near to zero. Instead of the currents of the windings, it is possible to consider other operating quantities such as forces or magnetic fluxes which are however tightly related to the currents. Furthermore, it is possible to use the squares of the currents $i^2$ as the control quantities under consideration.

Next we consider a winding group of the kind mentioned above, e.g. the winding group constituted by the windings 105x+ and 105x-. The resultant of the magnetic forces generated by the windings of the winding group can be adjusted by using only non-negative changes in the magnetic forces or only non-positive changes in the magnetic forces. This can be understood in the following way. We first assume that a desired change in the resultant of the magnetic forces is accomplished so that some of the magnetic forces are increased, some the magnetic forces are decreased, and possibly some the magnetic forces are kept unchanged. If we want to use only non-positive changes, we decrease all the magnetic forces by an amount that is at least the greatest one of the increases. This does not change the resultant of the magnetic forces but, as a corollary, none of the magnetic forces is increased but each of them is either decreased or kept unchanged. Correspondingly, if we want to use only non-negative changes, we increase all the magnetic forces by an amount that is at least the greatest one of the absolute values of the decreases. This does not change the resultant of the magnetic forces, but as a corollary, none of the magnetic forces is decreased but each of them is either increased or kept unchanged. The operating points of the currents of the windings can be moved upwards by using only non-negative changes in the magnetic forces for adjusting the resultant of the magnetic forces. Correspondingly, the operating points of the currents of the windings can be moved downwards by using only non-positive changes in the magnetic forces for adjusting the resultant of the magnetic forces. This principle is applicable also in e.g. such cases where a magnetic actuator of a radial magnetic bearing comprises six legs and three windings where the windings are positioned 120 degrees apart from each other in the circumferential direction in a corresponding way as the windings 105x+, 105y+, 105x-, and 105y- shown in figure 1a are positioned 90 degrees apart from each other the circumferential direction. The above-mentioned three windings constitute a winding group capable of generating three mutually cancelling magnetic forces, i.e. three mutually cancelling components of the resultant magnetic force.

In a control device according to an exemplifying and non-limiting embodiment of the invention, the functional section 111 is configured to use, for each of one or more mutually non-overlapping winding groups each constituted by at least two of the windings and capable of generating mutually cancelling components of the resultant magnetic force, only zero voltages and current-decreasing voltages but not current-increasing voltages in response to a need to decrease operating points of control quantities, e.g. currents, of the winding group under consideration. It is to be noted that the above-mentioned "zero voltage" means typically slightly negative voltage because of the resistances of conductors and the conductive state threshold voltages of power electronic components. In the exemplifying case illustrated in figure 1a, the windings 105x+ and 105x- constitute a first one of the above-mentioned winding groups and the windings 105y+ and 105y- constitute a second one of the winding groups.

In a control device according to an exemplifying and non-limiting embodiment of the invention, the functional section 111 is configured to use, for each of the one or more winding groups, only zero voltages and current-increasing voltages but not current-decreasing voltages in response to a need to increase the operating points of the control quantities, e.g. the currents, of the winding group under consideration.

It is worth noting that in cases, such as e.g. the case illustrated in figure 1a, where the windings can be grouped into at least two winding groups, it is also possible to handle all the winding as a single winding group. As discussed earlier, the requirement for a winding group is the capability to generate mutually cancelling magnetic forces. When all the windings are handled as a single winding group, the operating points of the control quantities, e.g. currents, of all the windings can be increased by denying the use of current-decreasing voltages and the operating points can be decreased by denying the use of current-increasing voltages but it is naturally not possible to increase the operating points of the control quantities of some of the windings and to simultaneously decrease the operating points of the control quantities of other ones of the windings.

As mentioned earlier, the functional section 111 for selecting the voltages and shown in figures 1a,1c, and 1d can be implemented with the aid of a selection look-up table for outputting the voltage selectors $S_{x+}$, $S_{x-}$, $S_{y+}$ and $S_{y-}$. A control device according to an exemplifying and non-limiting embodiment of the invention is configured to maintain the selection look-up table so that the selection look-up table comprises two or more sub-tables each outputting the voltage selectors $S_{x+}$, $S_{x-}$, $S_{y+}$ and $S_{y-}$ on the basis of the selected control direction CD. The functional section 111 or some other part of the control device 101 is configured to select, for each of one or more mutually non-overlapping winding groups each constituted by at least two of the windings and capable of generating mutually cancelling components of the resultant magnetic force, one of the sub-tables at least partly on the basis of control quantities, e.g. currents, of the winding group under consideration. In the exemplifying case shown in figure 1a, the windings 105x+ and 105x- can be deemed to belong to a first winding group that is a winding group-X, and the windings 105y+ and 105y- can be deemed to belong to a second winding group that is a winding group-Y, or all the windings can be deemed to belong to a same winding group.

In conjunction with a control device according to an exemplifying and non-limiting embodiment of the invention, the selection look-up table comprises a first sub-table, a second sub-table, and a third sub-table. The first sub-table is a current-decreasing sub-table which allows only current-decreasing and zero voltages. The second sub-table is a full-voltage sub-table which allows current-decreasing, zero, and current increasing voltages. The third sub-table is a current-increasing sub-table which allows only current-increasing and zero voltages. The above-mentioned sub-tables for the exemplifying magnetic levitation system shown in figure 1a are presented below in tables 2a, 2b, and 2c. The second sub-table, Table 2a, is similar to Table 1 shown earlier but it is presented below for the sake of convenience. The notations in the sub-tables are similar to those in Table 1.

Table 2a. An exemplifying current-decreasing sub-table.

| Control direction | Winding | | | |
|---|---|---|---|---|
| | 105x+ | 105y+ | 105x- | 105y- |
| x+ | 0 | 0 | - | 0 |
| y+ | 0 | 0 | 0 | - |
| x- | - | 0 | 0 | 0 |
| y- | 0 | - | 0 | 0 |
| x+/y+ | 0 | 0 | - | - |
| x-/y+ | - | 0 | 0 | - |
| x+/y- | 0 | - | - | 0 |
| x-/y- | - | - | 0 | 0 |

Table 2b. An exemplifying full-voltae sub-table.

| Control direction | Winding | | | |
|---|---|---|---|---|
| | 105x+ | 105y+ | 105x- | 105y- |
| x+ | + | 0 | - | 0 |
| y+ | 0 | + | 0 | - |
| x- | - | 0 | + | 0 |
| y- | 0 | - | 0 | + |
| x+/y+ | + | + | - | - |
| x-/y+ | - | + | + | - |
| x+/y- | + | - | - | + |
| x-/y- | - | - | + | + |

Table 2c. An exemplifying current-increasing sub-table.

| Control direction | Winding | | | |
|---|---|---|---|---|
| | 105x+ | 105y+ | 105x- | 105y- |
| x+ | + | 0 | 0 | 0 |
| y+ | 0 | + | 0 | 0 |
| x- | 0 | 0 | + | 0 |
| y- | 0 | 0 | 0 | + |
| x+/y+ | + | + | 0 | 0 |
| x-/y+ | 0 | + | + | 0 |
| x+/y- | + | 0 | 0 | + |
| x-/y- | 0 | 0 | + | + |

The functional section 111 or some other part of the control device 101 is configured to select the current-decreasing sub-table, Table 2a, for the winding group-X, i.e. the windings 105x+ and 105x-, in response to a need to decrease the operating points of the control quantities, e.g. currents, of the winding group-X. Correspondingly, the functional section 111 or the other part of the control device 101 is configured to select the current-increasing sub-table, Table 2c, for the winding group-X in response to a need to increase the operating points of the control quantities of the winding group-X. Correspondingly, the functional section 111 or some other part of the control device 101 is configured to select the current-decreasing sub-table, Table 2a, for the winding group-Y, i.e. the windings 105y+ and 105y-, in response to a need to decrease the operating points of the control quantities, e.g. currents, of the winding group-y, and to select the current-increasing sub-table, Table 2c, for the winding group-y in response to a need to increase the operating points of the control quantities of the winding group-Y. The need to increase or decrease the operating points is indicated by a control signal OP that is received by the control device 101.

It is worth noting that using the current-decreasing sub-table or the current-increasing sub-table for one winding group and the full-voltage sub-table for another winding group changes the set of the selectable control directions presented in figure 1b. For example, in a case where the current-decreasing sub-table or the current-increasing sub-table is used for the winding group-X and the full-voltage sub-table is used for the winding group-Y, the selectable control directions x+/y+, x-/y+, x-/y+, and x+/y- are replaced by control directions whose angle with respect to the x-axis is arctan(2), i.e. not arctan(1) = 45 degrees.

In a control device according to an exemplifying and non-limiting embodiment of the invention, the functional section 111 is configured to select, for one of the winding groups, either the current-decreasing or the current-sub-table in response to a situation in which either the current-decreasing or the current-sub-table needs to be selected for another one of the winding groups. In this case, the set of possible control directions remains unchanged with respect to a situation in which the full-voltage sub-tables are used for all winding groups. In a case where the operating points of the control quantities of one of the winding groups are at a desirable area and thus these operating points are not wanted to be changed, the current-decreasing and the current-increasing sub-tables can be used for this winding group alternatively on successive control periods.

In a control device according to another exemplifying and non-limiting embodiment of the invention, the functional section is allowed to select the current-decreasing sub-table or the current-increasing sub-table for one of the winding groups and the full-voltage sub-table for another one of the winding groups. The functional section 110 is configured to change the set of the selectable control directions and the boundaries of the sectors $s_1$-$s_8$ shown in figure 1b accordingly.

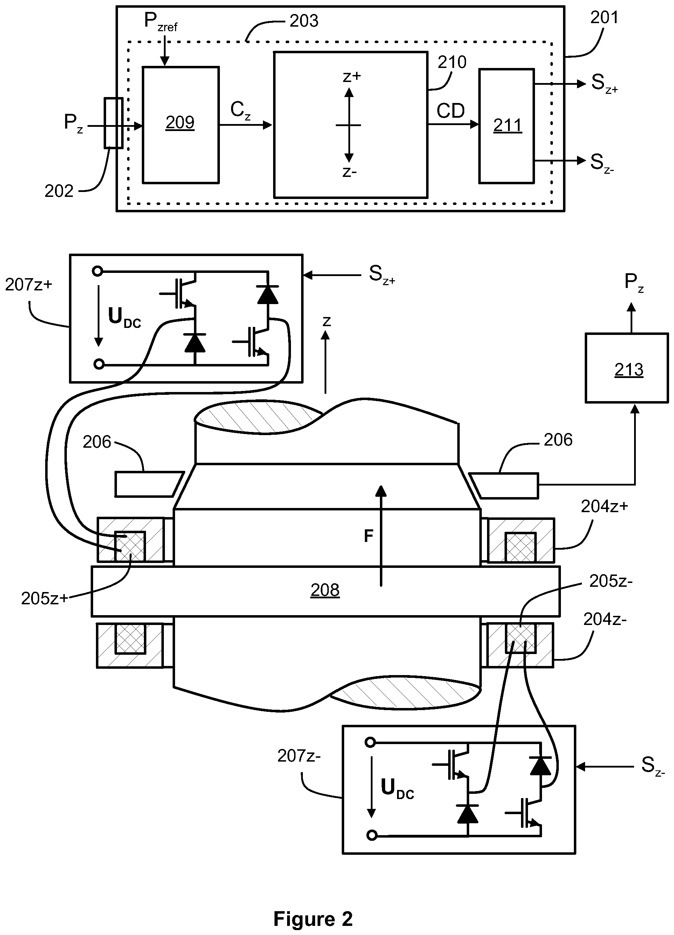

Figure 2 shows a schematic illustration of a magnetic levitation system comprising a control device 201 according to an exemplifying and non-limiting embodiment of the invention. In the exemplifying case illustrated in figure 2, the magnetic levitation system is an axial magnetic bearing for supporting an object 208 in directions parallel to an axis of rotational symmetry of the object. Figure 2 shows only a part of the object 208. The axis of the rotational symmetry is parallel with the z-axis shown in figure 2. The object 208 to be levitated can be for example a rotor or an electrical machine. The magnetic levitation system comprises magnetic actuators 204z+ and 204z- constituting electromagnets for magnetically supporting the object 208. The magnetic actuator 204z+ comprises a ferromagnetic core structure and a windings 205z+ for generating a magnetic flux that directs to the object 208 a magnetic force in the positive direction of the z-axis. Correspondingly, the magnetic actuator 204z- comprises a ferromagnetic core structure and a windings 205z- for generating a magnetic flux that directs to the object 208 a magnetic force in the negative direction of the z-axis. The magnetic levitation system comprises equipment for generating a position signal $P_z$ indicative of a position of the object 208 with respect to the magnetic actuators. In this exemplifying case, the position $P_z$ is indicative of the z-coordinate of a predetermined point of the object 208.

In the exemplifying case illustrated in figure 2, the equipment for generating the position signal comprises sensor 206 and a circuitry 213 for generating the position signal $P_z$ on the basis of an output signal of the sensor. The sensor 206 can be, for example but not necessarily, an inductive sensor where the inductance is dependent on the distance from the sensor to a conical surface of the object 208, and the circuitry 213 can be configured to form the position signal $P_z$ on the basis of the inductance. The equipment for generating the position signal $P_z$ comprises advantageously also another sensor facing towards another conical surface of the object 208, where the other conical surface tapers in the negative z-direction. In this case, the circuitry 213 can be configured to form the position signal $P_z$ on the basis of the difference between the inductances of the sensors. The other sensor and the other conical surface of the object 208 are not shown in figure 2.

The magnetic levitation system comprises controllable voltage sources 207z+ and 207z- for directing controllable voltages to the windings 205z+ and 205z-. In the exemplifying magnetic levitation system illustrated in figure 2, the voltage sources are three-level voltage sources each of which is capable of producing three discrete voltage values. The voltages sources are controlled by three-level voltage selectors $S_{z+}$ and $S_{z-}$ so that for example voltage selector $S_{z+}$ determines whether the voltage produced by the voltage source 207z+ is positive, negative, or substantially zero.

The magnetic levitation system comprises a control device 201 for controlling the magnetic actuators 204z+ and 204z-. The control device comprises a signal input 202 for receiving the position signal $P_z$, and a controller 203 for controlling the voltages directed to the windings 205z+ and 205z- in a time-discrete way at temporally successive control periods. The voltages are controlled on the basis of the deviation between the position of the object 208 and the reference position of the object. The controller 203 comprises a functional section 209 for producing, for each of the temporally successive control periods, a control value $C_z$ at least partly on the basis of the position signal $P_z$. The control value $C_z$ indicates a direction in which a resultant magnetic force F directed to the object 208 should be changed in order to decrease the deviation of the position.

The controller 203 comprises a functional section 210 for selecting, for each of the temporally successive control periods, a control direction CD so that changing the resultant magnetic force F in the selected control direction improves the ability of the resultant magnetic force to decrease the deviation of the position. The controller 203 comprises a functional section 211 for setting, for each of the temporally successive control periods, the voltages of the windings 205z+ and 205z- in accordance with the selected control direction CD so as to decrease the deviation of the position by changing the resultant magnetic force with the aid of the voltages.

In the exemplifying case illustrated in figure, the windings 205z+ and 205z- constitute a winding group capable of generating mutually cancelling magnetic forces. In a control device according to an exemplifying and non-limiting embodiment of the invention, the functional section 211 is configured to use, for the windings 205z+ and 205z-, only zero voltages and current-decreasing voltages but not current-increasing voltages in response to a need to decrease operating points of control quantities, e.g. currents, of the windings.

In a control device according to an exemplifying and non-limiting embodiment of the invention, the functional section 111 is configured to use, for the windings 205z+ and 205z-, only zero voltages and current-increasing voltages but not current-decreasing voltages in response to a need to increase the operating points of the control quantities, e.g. the currents, of the windings.

The control devices 101 and 201 shown in figures 1a and 2 can be implemented with one or more analogue circuits and/or with one or more digital processor circuits, each of which can be a programmable processor circuit provided with appropriate software, a dedicated hardware processor such as, for example, an application specific integrated circuit "ASIC", or a configurable hardware processor such as, for example, a field programmable gate array "FPGA".

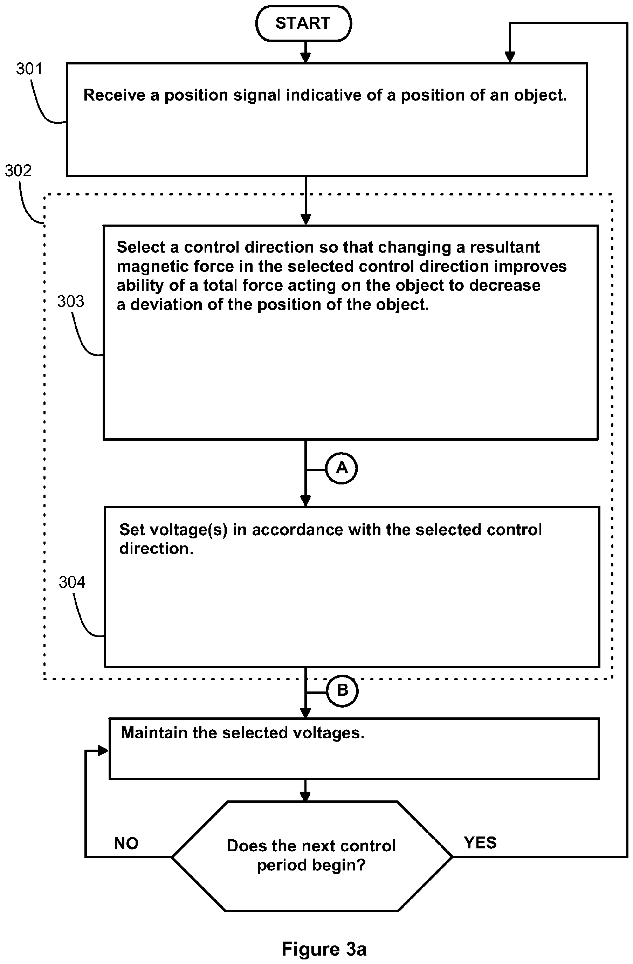

Figure 3a shows a flowchart of a method according to an exemplifying and non-limiting embodiment of the invention for controlling a magnetic levitation system that can be, for example but not necessarily, an active magnetic bearing "AMB". The method comprises:

- receiving, in phase 301, a position signal indicative of a position of an object levitated by one or more magnetic fluxes, and

- controlling, in phase 302, one or more voltages directed to one or more windings of the magnetic levitation system on the basis of a deviation of the position of the object from a reference position so as to control a resultant magnetic force directed to the object.

The control of the one or more voltages in the phase 302 comprises the following actions:

- action 303: selecting, for each of temporally successive control periods, a control direction so that changing the resultant magnetic force in the selected control direction improves ability of a total force acting on the object to decrease the deviation of the position, and

- action 304: setting, for each of the temporally successive control periods, the one or more voltages in accordance with the selected control direction so as to decrease the deviation of the position by changing the resultant magnetic force with the aid of the one or more voltages.

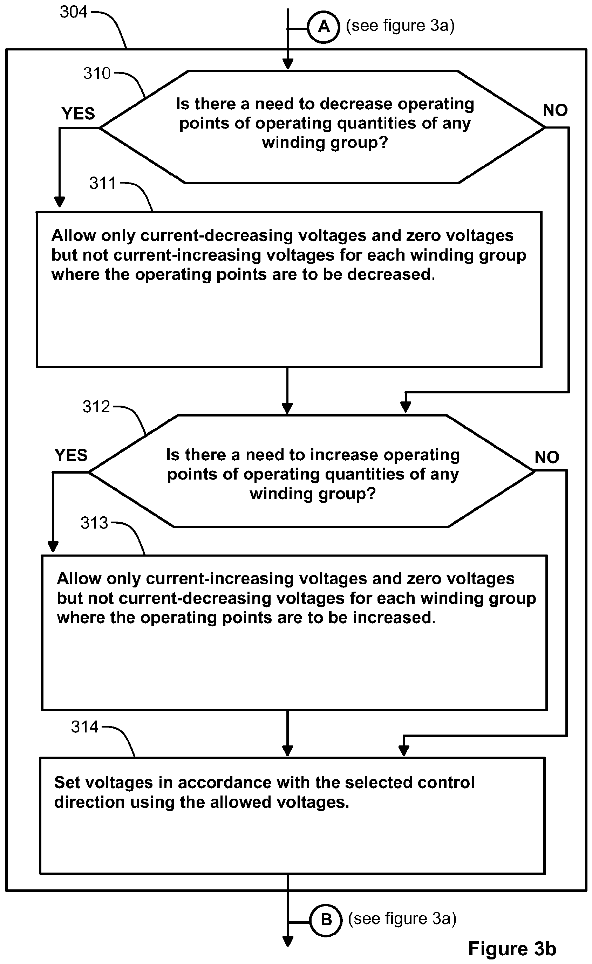

In a method according to an exemplifying and non-limiting embodiment of the invention, the action 304 for setting the one or more voltages comprises the following sub-actions illustrated in figure 3b:

- sub-action 311: allowing, for each of one or more mutually non-overlapping winding groups each constituted by at least two of the windings and capable of generating mutually cancelling components of the resultant magnetic force, only zero voltages and current-decreasing voltages but not current-increasing voltages in response to a need 310 to decrease operating points of operating quantities, e.g. currents, magnetic fluxes, or forces, of the winding group under consideration,

- sub-action 313: allowing, for each of the winding groups, only zero voltages and current-increasing voltages but not current-decreasing voltages in response to a need 312 to increase operating points of the operating quantities of the winding group under consideration, and

- sub-action 314: setting the one or more voltages in accordance with the selected control direction and using the allowed voltages.

A method according to an exemplifying and non-limiting embodiment of the invention comprises using a pre-determined rule for producing, on the basis of the deviation of the position, one or more reference values for one or more control quantities defining operation of the magnetic levitation system. The method comprises subtracting, from the reference values, previous reference values corresponding to a previous one of the temporally successive control periods so as to produce one or more control values. The method comprises selecting the control direction on the basis of the one or more control values.

A method according to an exemplifying and non-limiting embodiment of the invention comprises using a pre-determined rule for producing, on the basis of the deviation of the position, one or more reference values for one or more control quantities defining operation of the magnetic levitation system. The method comprises subtracting, from the reference values, prevailing values indicative of the one or more control quantities so as to produce one or more control values. The method comprises selecting the control direction on the basis of the one or more control values.

A method according to an exemplifying and non-limiting embodiment of the invention comprises maintaining a correction model for correcting the selection of the control direction. The correction model contains information about characteristics of magnetic circuits of the magnetic levitation system and is configured to receive input information indicative of the selected control direction, the prevailing currents of the windings, and the position of the object.

A method according to an exemplifying and non-limiting embodiment of the invention comprises determining a temporal length of each of the temporally successive control periods on the basis of (i) the one or more control values indicating required changes of the one or more control quantities and (ii) a fact that the one or more voltages set for the control period under consideration at least partly determine a rate of change of each of the one or more control quantities.

A method according to an exemplifying and non-limiting embodiment of the invention comprises keeping, in order to reduce switching frequency, the one or more voltages unchanged with respect to corresponding one or more voltages used during a previous one of the temporally successive control periods in response to a situation in which a vector norm of the one or more control values is below a pre-determined limit.

A method according to an exemplifying and non-limiting embodiment of the invention comprises selecting the control direction from among a set of selectable control directions, e.g. x+, x-, y+, y-, x+/y+, x+/y-, x-/y+, x-/y- shown in figure 1b, and selecting, for each of the one or more voltages, a voltage value from among a set of selectable voltage values, e.g. $\approx +U_{DC}$, $\approx 0$, $\approx -U_{DC}$, in accordance with the selected control direction.

A method according to an exemplifying and non-limiting embodiment of the invention comprises maintaining a selection look-up table for outputting one or more voltage selectors on the basis of a look-up key comprising an indicator of the selected control direction, the one or more voltage selectors being suitable for controlling one or more controllable voltage sources to produce the one or more voltages in accordance with the selected control direction.

In a method according to an exemplifying and non-limiting embodiment of the invention, the selection look-up table comprises two or more sub-tables each outputting the one or more voltage selectors on the basis of the selected control direction. The method comprises selecting, for each of one or more mutually non-overlapping winding groups each constituted by at least two of the windings and capable of generating mutually cancelling components of the resultant magnetic force, one of the sub-tables at least partly on the basis of operating quantities of the winding group under consideration.

In a method according to an exemplifying and non-limiting embodiment of the invention, a first one of the sub-tables allows only current-decreasing and zero voltages, a second one of the sub-tables allows current-decreasing, zero, and current increasing voltages, and a third one of the sub-tables allows only current-increasing and zero voltages. The method comprises selecting the first one of the sub-tables in response to a need to decrease operating points of the operating quantities of the winding group under consideration, and selecting the third one of the sub-tables in response to a need to increase the operating points of the operating quantities of the winding group under consideration.

A method according to an exemplifying and non-limiting embodiment of the invention comprises selecting, for a first one of the winding groups, either the first or third one of the sub-tables in response to a situation in which either the first or third one of the sub-tables needs to be selected for a second one of the winding groups.

In a method according to an exemplifying and non-limiting embodiment of the invention, the position signal constitutes a position vector expressing the position of the object in a planar two-dimensional coordinate system whose origin is at the reference position and where the selectable control directions are defined by first geometric lines intersecting each other at the origin of the planar two-dimensional coordinate system. The method comprises selecting one of the selectable control directions so that changing the resultant magnetic force in the selected control direction improves the ability of the total force to decrease the magnitude of the position vector.

In a method according to an exemplifying and non-limiting embodiment of the invention, the planar two-dimensional coordinate system is divided into sectors by second geometric lines intersecting each other at the origin so that each of the selectable control directions belongs to one of the sectors and a symmetry line of each sector is one of the selectable control directions.

A method according to an exemplifying and non-limiting embodiment of the invention comprises determining a particular one of the sectors to which an opposite vector of the position vector belongs and selecting the control direction which belongs to the determined sector.

A method according to an exemplifying and non-limiting embodiment of the invention comprises using a pre-determined rule for producing, on the basis of the position vector, a reference vector of control quantities defining operation of the magnetic levitation system. The method comprises subtracting, from the reference vector, previous reference vector corresponding to a previous one of the temporally successive control periods so as to produce a control vector. Furthermore, the method comprises determining a particular one of the sectors to which the control vector belongs and selecting the control direction which belongs to the determined sector.

A method according to an exemplifying and non-limiting embodiment of the invention comprises using a pre-determined rule for producing, on the basis of the position vector, a reference vector of control quantities defining operation of the magnetic levitation system. The method comprises subtracting, from the reference vector, a vector indicative of prevailing values of the control quantities so as to produce a control vector. Furthermore, the method comprises determining a particular one of the sectors to which the control vector belongs and selecting the control direction which belongs to the determined sector.

In a method according to an exemplifying and non-limiting embodiment of the invention, the central angles of the sectors are proportional to magnitudes of sector-specific voltage vectors so that a greater magnitude of the sector-specific voltage vector corresponds to a greater central angle of the corresponding sector. Each sector-specific voltage vector is a vector of the voltages corresponding to the control direction related to the sector under consideration.

In a method according to an exemplifying and non-limiting embodiment of the invention, the ratio $\sin(\alpha_i/2) / V_i$ is a same for all of the sectors, where $\alpha_i$ is the central angle of the i:th sector, $V_i$ is the magnitude of the sector-specific voltage vector related to i:th the sector, and i = 1, 2, ..., N, the N being a number of the sectors.

A method according to an exemplifying and non-limiting embodiment of the invention comprises maintaining a correction look-up table for correcting the selection of the control direction. The correction look-up table contains information about characteristics of magnetic circuits of the magnetic levitation system and is configured to receive input information indicative of the selected control direction, the prevailing currents of the windings, and the position of the object.

A computer program according to an exemplifying and non-limiting embodiment of the invention comprises computer executable instructions for controlling a programmable processing system to carry out actions related to a method according to any of the above-described exemplifying embodiments of the invention.

A computer program according to an exemplifying and non-limiting embodiment of the invention comprises software means for controlling a programmable processing system to control one or more voltages directed to one or more windings of a magnetic levitation system on the basis of a deviation of a position of an object from a reference position of the object so as to control a resultant magnetic force directed to the object. The software means comprise computer executable instructions for controlling the programmable processing system to:

- select, for each of temporally successive control periods, a control direction so that changing the resultant magnetic force in the selected control direction improves ability of a total force acting on the object to decrease the deviation of the position, and

- set, for each of the temporally successive control periods, the one or more voltages in accordance with the selected control direction so as to decrease the deviation of the position by changing the resultant magnetic force with the aid of the one or more voltages.

In a computer program according to an exemplifying and non-limiting embodiment of the invention, the software means further comprise computer executable instructions for controlling the programmable processing system to use, for each of one or more mutually non-overlapping winding groups each constituted by at least two of the windings and capable of generating mutually cancelling components of the resultant magnetic force, only zero voltages and current-decreasing voltages in response to a need to decrease operating points of operating quantities of the winding group under consideration.

In a computer program according to an exemplifying and non-limiting embodiment of the invention, the software means further comprise computer executable instructions for controlling the programmable processing system to use, for each of one or more mutually non-overlapping winding groups each constituted by at least two of the windings and capable of generating mutually cancelling components of the resultant magnetic force, only zero voltages and current-increasing voltages in response to a need to increase operating points of operating quantities of the winding group under consideration.

The software means can be e.g. subroutines or functions implemented with a suitable programming language and with a compiler suitable for the programming language and for the above-mentioned programmable processing system.

A computer program product according to an exemplifying and non-limiting embodiment of the invention comprises a computer readable medium, e.g. an optical disc, encoded with a computer program according to an exemplifying embodiment of invention.

A signal according to an exemplifying and non-limiting embodiment of the invention is encoded to carry information defining a computer program according to an exemplifying embodiment of invention.

The specific examples provided in the description given above should not be construed as limiting the scope and/or the applicability of the appended claims.

**Claims**

1. A control device (101, 201) for controlling a magnetic levitation system, the control device comprising:

 - a signal input (102, 202) for receiving a position signal indicative of a position of an object levitated by one or more magnetic fluxes, and
 - a controller (103, 203) for controlling one or more voltages directed to one or more windings of the magnetic levitation system on the basis of a deviation of the position of the object from a reference position so as to control a resultant magnetic force directed to the object,

 wherein the controller is configured to:

- select, for each of temporally successive control periods, a control direction so that changing the resultant magnetic force in the selected control direction improves ability of a total force acting on the object to decrease the deviation of the position, and

- set, for each of the temporally successive control periods, the one or more voltages in accordance with the selected control direction so as to decrease the deviation of the position by changing the resultant magnetic force with the one or more voltages,

**characterized in that** the controller is configured to select the control direction from among a set of selectable control directions (x+, x-, y+, y-, x+/y+, x+/y-, x-/y+, x-/y-, z+, z-) and to select, for each of the one or more voltages, a voltage value from among a set of selectable voltage values (+$U_{DC}$, 0, -$U_{DC}$) in accordance with the selected control direction.

2. A control device according to claim 1, wherein the controller is configured to use, for each of one or more mutually non-overlapping winding groups each constituted by at least two of the windings and capable of generating mutually cancelling components of the resultant magnetic force, only zero voltages and current-decreasing voltages in response to a need to decrease operating points of currents of the winding group under consideration.

3. A control device according to claim 1 or 2, wherein the controller is configured to use, for each of one or more mutually non-overlapping winding groups each constituted by at least two of the windings and capable of generating mutually cancelling components of the resultant magnetic force, only zero voltages and current-increasing voltages in response to a need to increase operating points of currents of the winding group under consideration.

4. A control device according to any of claims 1-3, wherein the controller is configured to use a predetermined rule for producing, on the basis of the deviation of the position, one or more reference values for one or more control quantities defining operation of the magnetic levitation system and to subtract, from the reference values, previous reference values corresponding to a previous one of the temporally successive control periods so as to produce one or more control values, and to select the control direction on the basis of the one or more control values.

5. A control device according to any of claims 1-3, wherein the controller is configured to use a predetermined rule for producing, on the basis of the deviation of the position, one or more reference values for one or more control quantities defining operation of the magnetic levitation system and to subtract, from the reference values, prevailing values indicative of the one or more control quantities so as to produce one or more control values, and to select the control direction on the basis of the one or more control values.

6. A control device according to any of claims 1-5, wherein the controller is configured to maintain a correction model for correcting the selection of the control direction, the correction model containing information about characteristics of magnetic circuits of the magnetic levitation system and configured to receive input information indicative of the selected control direction, the prevailing currents of the windings, and the position of the object.

7. A control device according to claim 4 or 5, wherein the controller is configured to determine a temporal length of each of the temporally successive control periods on the basis of (i) the one or more control values indicating required changes of the one or more control quantities and (ii) a fact that the one or more voltages set for the control period under consideration at least partly determine a rate of change of each of the one or more control quantities.

8. A control device according to claim 4 or 5 or 7, wherein the controller is configured to keep, in order to reduce switching frequency, the one or more voltages unchanged with respect to corresponding one or more voltages used during a previous one of the temporally successive control periods in response to a situation in which a vector norm of the one or more control values is below a pre-determined limit.

9. A control device according to any of claims 1-8, wherein the position signal constitutes a position vector expressing the position of the object in a planar two-dimensional coordinate system whose origin is at the reference position and the selectable control directions are defined by first geometric lines intersecting each other at the origin of the planar two-dimensional coordinate system, and the controller is configured to select one of the selectable control directions so that changing the resultant magnetic force in the selected control direction improves the ability of the total force to decrease the magnitude of the position vector.

10. A control device according to claim 9, wherein the planar two-dimensional coordinate system is divided into sectors by second geometric lines intersecting each other at the origin so that each of the selectable control directions belongs to one of the sectors and a symmetry line of each sector is one of the selectable control directions, and the controller is configured to determine a particular one of the sectors to which an opposite vector of the position vector belongs and to select the control direction which belongs to the determined sector.

11. A control device according to claim 9, wherein the planar two-dimensional coordinate system is divided into sectors by second geometric lines intersecting each other at the origin so that each of the selectable control directions belongs to one of the sectors and a symmetry line of each sector is one of the selectable control directions, and the controller is configured to use a predetermined rule for producing, on the basis of the position vector, a reference vector of control quantities defining operation of the magnetic levitation system and to subtract, from the reference vector, previous reference vector corresponding to a previous one of the temporally successive control periods so as to produce a control vector, and the controller is configured to determine a particular one of the sectors to which the control vector belongs and to select the control direction which belongs to the determined sector.

12. A control device according to any of claims 1-11, wherein the controller is configured to maintain a correction look-up table for correcting the selection of the control direction, the correction look-up table containing information about characteristics of magnetic circuits of the magnetic levitation system and configured to receive input information indicative of the selected control direction, the prevailing currents of the windings, and the position of the object.

13. A magnetic levitation system comprising:

   - at least one magnetic actuator (104, 204z+, 204z-) comprising one or more windings (105x+, 105x-, 105y+, 105y-, 205z+, 205z-) for generating one or more magnetic fluxes for levitating an object,
   - equipment (106x+, 106x-, 106y+, 106y-, 113, 206, 213) for generating a position signal indicative of a position of the object with respect to the magnetic actuator,
   - one or more controllable voltage sources (107x+, 107x-, 107y+, 107y-, 207z+, 207z-) for directing one or more voltages to the one or more windings, and
   - a control device (101, 201) according to any of claims 1-12 for controlling the one or more voltages on the basis of a deviation of the position of the object from a reference position so as to control the one or more magnetic fluxes to levitate the object.

14. A method for controlling a magnetic levitation system, the method comprising:

   - receiving (301) a position signal indicative of a position of an object levitated by one or more magnetic fluxes, and
   - controlling (302) one or more voltages directed to one or more windings of the magnetic levitation system on the basis of a deviation of the position of the object from a reference position so as to control a resultant magnetic force directed to the object,

   wherein the one or more voltages are controlled by:

   - selecting (303), for each of temporally successive control periods, a control direction so that changing the resultant magnetic force in the selected control direction improves ability of a total force acting on the object to decrease the deviation of the position, and
   - setting (304), for each of the temporally successive control periods, the one or more voltages in accordance with the selected control direction so as to decrease the deviation of the position by changing the resultant magnetic force with the one or more voltages,

   **characterized in that** the control direction is selected from among a set of selectable control directions (x+, x-, y+, y-, x+/y+, x+/y-, x-/y+, x-/y-, z+, z-) and, for each of the one or more voltages, a voltage value is selected from among a set of selectable voltage values ($+U_{DC}$, 0, $-U_{DC}$) in accordance with the selected control direction.

15. A computer program for controlling a magnetic levitation system, the computer program comprising:

   - computer executable instructions for controlling a programmable processing system to control one or more voltages directed to one or more windings of the magnetic levitation system on the basis of a deviation of a position of an object from a reference position of the object so as to control a resultant magnetic force directed to the object,

   wherein the computer program comprises computer executable instructions for controlling the programmable processing system to:

- select, for each of temporally successive control periods, a control direction so that changing the resultant magnetic force in the selected control direction improves ability of a total force acting on the object to decrease the deviation of the position, and
- set, for each of the temporally successive control periods, the one or more voltages in accordance with the selected control direction so as to decrease the deviation of the position by changing the resultant magnetic force with the one or more voltages,

**characterized in that** the computer program comprises computer executable instructions for controlling the programmable processing system to:

- select the control direction from among a set of selectable control directions (x+, x-, y+, y-, x+/y+, x+/y-, x-/y+, x-/y-, z+, z-), and
- select, for each of the one or more voltages, a voltage value from among a set of selectable voltage values ($+U_{DC}$, 0, $-U_{DC}$) in accordance with the selected control direction.

**Patentansprüche**

1. Eine Steuervorrichtung (101, 201) zum Steuern eines Magnetschwebesystems, die Steuervorrichtung umfassend:

   - einen Signaleingang (102, 202) zum Empfangen eines Positionssignals, das eine Position eines durch einen oder mehrere magnetische Flüsse in Schwebe gehaltenen Objekts anzeigt, und
   - eine Steuerung (103, 203) zum Steuern einer oder mehrerer Spannungen, die auf eine oder mehrere Wicklungen des Magnetschwebesystems gerichtet sind, aufgrund einer Abweichung der Position des Objekts von einer Referenzposition, um eine resultierende Magnetkraft, die auf das Objekt gerichtet ist, zu steuern,

   wobei die Steuerung konfiguriert ist, um:

   - für jede der zeitlich aufeinanderfolgenden Steuerperioden eine Steuerrichtung so auszuwählen, dass die Änderung der resultierenden Magnetkraft in der ausgewählten Steuerrichtung die Fähigkeit einer auf das Objekt wirkenden Gesamtkraft verbessert, um die Abweichung der Position zu verringern, und
   - für jede der zeitlich aufeinanderfolgenden Steuerperioden die eine oder die mehreren Spannungen entsprechend der ausgewählten Steuerrichtung einzustellen, um die Abweichung der Position durch Änderung der resultierenden Magnetkraft mit der einen oder den mehreren Spannungen zu verringern,

   **dadurch gekennzeichnet, dass** die Steuerung konfiguriert ist, um die Steuerrichtung aus einem Satz auswählbarer Steuerrichtungen (x+, x-, y+, y-, x+/y+, x+/y-, x-/y+, x-/y-, z+, z-) auszuwählen und um für jede der einen oder mehreren Spannungen einen Spannungswert aus einem Satz auswählbarer Spannungswerte ($+U_{DC}$, 0, $-U_{DC}$) gemäß der ausgewählten Steuerrichtung auszuwählen.

2. Steuervorrichtung nach Anspruch 1, wobei die Steuerung konfiguriert ist, um für jede von einer oder mehreren sich gegenseitig nicht überlappenden Wicklungsgruppen, die jeweils aus mindestens zwei der Wicklungen bestehen und sich gegenseitig aufhebende Komponenten der resultierenden Magnetkraft erzeugen können, nur Nullspannungen und stromsenkende Spannungen als Reaktion auf die Notwendigkeit zu verwenden, um die Betriebspunkte der Ströme der betreffenden Wicklungsgruppe zu verringern.

3. Steuervorrichtung nach Anspruch 1 oder 2, wobei die Steuerung konfiguriert ist, um für jede von einer oder mehreren sich gegenseitig nicht überlappenden Wicklungsgruppen, die jeweils aus mindestens zwei der Wicklungen bestehen und sich gegenseitig aufhebende Komponenten der resultierenden Magnetkraft erzeugen können, nur Nullspannungen und stromerhöhende Spannungen als Reaktion auf die Notwendigkeit zu verwenden, um die Betriebspunkte der Ströme der betreffenden Wicklungsgruppe zu erhöhen.

4. Steuervorrichtung nach einem der Ansprüche 1-3, wobei die Steuerung konfiguriert ist, um eine vorbestimmte Regel zu verwenden, um basierend auf der Abweichung der Position einen oder mehrere Referenzwerte für eine oder mehrere Steuergrößen, die den Betrieb des Magnetschwebesystems definieren, zu erzeugen, und um von den Referenzwerten frühere Referenzwerte, die einer vorherigen der zeitlich aufeinanderfolgenden Steuerperioden entsprechen, zu subtrahieren, um einen oder mehrere Steuerwerte zu erzeugen, und um die Steuerrichtung aufgrund des einen oder der mehreren Steuerwerte auszuwählen.

5. Steuervorrichtung nach einem der Ansprüche 1-3, wobei die Steuerung konfiguriert ist, um eine vorbestimmte Regel zu verwenden, um basierend auf der Abweichung der Position einen oder mehrere Referenzwerte für eine oder mehrere Steuergrößen, die den Betrieb des Magnetschwebesystems definieren, zu erzeugen, und um von den Referenzwerten vorherrschende Werte, die die eine oder mehreren Steuergrößen angeben, zu subtrahieren, um einen oder mehrere Steuerwerte zu erzeugen, und um die Steuerrichtung aufgrund des einen oder der mehreren Steuerwerte auszuwählen.

6. Steuervorrichtung nach einem der Ansprüche 1-5, wobei die Steuerung konfiguriert ist, um ein Korrekturmodell zum Korrigieren der Auswahl der Steuerrichtung aufrechtzuerhalten, wobei das Korrekturmodell Informationen über Eigenschaften von Magnetkreisen des Magnetschwebesystems enthält und konfiguriert ist, um Eingangsinformationen zu empfangen, die die ausgewählte Steuerrichtung, die vorherrschenden Ströme der Wicklungen und die Position des Objekts anzeigen.

7. Steuervorrichtung nach Anspruch 4 oder 5, wobei die Steuerung konfiguriert ist, um eine zeitliche Länge jeder der zeitlich aufeinanderfolgenden Steuerperioden aufgrund von (i) dem einen oder den mehreren Steuerwerten, die erforderlichen Änderungen der einen oder mehreren Steuergrößen angeben, und (ii) einer Tatsache, dass die eine oder mehreren Spannungen, die für die betreffende Steuerperiode eingestellt sind, zumindest teilweise eine Änderungsrate von jeder der einen oder mehreren Steuergrößen bestimmen, zu bestimmen.

8. Steuervorrichtung nach Anspruch 4 oder 5 oder 7, wobei die Steuerung konfiguriert ist, um zur Verringerung der Schaltfrequenz die eine oder mehreren Spannungen unverändert in Bezug auf die entsprechende eine oder mehrere Spannungen, die während einer vorherigen der zeitlich aufeinanderfolgenden Steuerperioden als Reaktion auf eine Situation, in der eine Vektornorm des einen oder der mehreren Steuerwerte unter einem vorgegebenen Grenzwert liegt, verwendet wurden.

9. Steuervorrichtung nach einem der Ansprüche 1-8, wobei das Positionssignal einen Positionsvektor darstellt, der die Position des Objekts in einem planaren zweidimensionalen Koordinatensystem ausdrückt, dessen Ursprung an der Referenzposition liegt und dessen auswählbare Steuerrichtungen durch erste geometrische Linien definiert sind, die sich am Ursprung des planaren zweidimensionalen Koordinatensystems schneiden, und die Steuerung konfiguriert ist, um eine der auswählbaren Steuerrichtungen auszuwählen, so dass eine Änderung der resultierenden Magnetkraft in der ausgewählten Steuerrichtung die Fähigkeit der Gesamtkraft verbessert, um die Größe des Positionsvektors zu verringern.

10. Steuervorrichtung nach Anspruch 9, wobei das planare zweidimensionale Koordinatensystem durch zweite geometrische Linien, die einander am Ursprung schneiden, in Sektoren unterteilt wird, so dass jede der auswählbaren Steuerrichtungen zu einem der Sektoren gehört und eine Symmetrielinie jedes Sektors eine der auswählbaren Steuerrichtungen ist, und wobei die Steuerung konfiguriert ist, um einen bestimmten Sektor zu bestimmen, zu dem ein entgegengesetzter Vektor des Positionsvektors gehört, und um die Steuerrichtung auszuwählen, die zu dem bestimmten Sektor gehört.

11. Steuervorrichtung nach Anspruch 9, wobei das planare zweidimensionale Koordinatensystem durch zweite geometrische Linien, die einander am Ursprung schneiden, in Sektoren unterteilt wird, so dass jede der auswählbaren Steuerrichtungen zu einem der Sektoren gehört und eine Symmetrielinie jedes Sektors eine der auswählbaren Steuerrichtungen ist, und wobei die Steuerung konfiguriert ist, um eine vorbestimmte Regel zu verwenden, um aufgrund des Positionsvektors einen Referenzvektor von Steuergrößen, die den Betrieb des Magnetschwebesystems definieren, zu erzeugen, und von dem Referenzvektor einen vorherigen Referenzvektor, der einer vorherigen der zeitlich aufeinanderfolgenden Steuerperioden entspricht, zu subtrahieren, um einen Steuervektor zu erzeugen, und wobei die Steuerung konfiguriert ist, um einen bestimmten Sektor zu bestimmen, zu dem der Steuervektor gehört, und um die Steuerrichtung auszuwählen, die zu dem bestimmten Sektor gehört.

12. Steuervorrichtung nach einem der Ansprüche 1-11, wobei die Steuerung konfiguriert ist, um eine Korrektur-Nachschlagetabelle zum Korrigieren der Auswahl der Steuerrichtung aufrechtzuerhalten, wobei die Korrektur-Nachschlagetabelle Informationen über Eigenschaften von Magnetkreisen des Magnetschwebesystems enthält und konfiguriert ist, um Eingangsinformationen zu empfangen, die die ausgewählte Steuerrichtung, die vorherrschenden Ströme der Wicklungen und die Position des Objekts anzeigen.

13. Magnetschwebesystem umfassend:

- mindestens einen magnetischen Aktuator (104, 204z+, 204z-) mit einer oder mehreren Wicklungen (105x+, 105x-, 105y+, 105y-, 205z+, 205z-) zum Erzeugen eines oder mehrerer magnetischer Ströme zum Schweben eines Objekts,
- Vorrichtung (106x+, 106x-, 106y+, 106y-, 113, 206, 213) zum Erzeugen eines Positionssignals, das eine Position des Objekts in Bezug auf den Magnetaktuator anzeigt,
- eine oder mehrere steuerbare Spannungsquellen (107x+, 107x-, 107y+, 107y-, 207z+, 207z-), um eine oder mehrere Spannungen auf die eine oder die mehreren Wicklungen zu richten, und
- eine Steuervorrichtung (101, 201) nach einer der Ansprüche 1-12 zum Steuern der einen oder mehreren Spannungen aufgrund einer Abweichung der Position des Objekts von einer Referenzposition, um den einen oder die mehreren magnetischen Flüsse zum Schweben des Objekts zu steuern.

14. Verfahren zum Steuern eines Magnetschwebesystems, das Verfahren umfassend:

- Empfangen (301) eines Positionssignals, das eine Position eines durch einen oder mehrere magnetische Flüsse in Schwebe gehaltenes Objekt anzeigt, und
- Steuern (302) einer oder mehrerer Spannungen, die auf eine oder mehrere Wicklungen des Magnetschwebesystems gerichtet sind, aufgrund einer Abweichung der Position des Objekts von einer Referenzposition, um eine resultierende Magnetkraft, die auf das Objekt gerichtet ist, zu steuern,

wobei die eine oder mehreren Spannungen gesteuert werden durch:

- Auswählen (303) einer Steuerrichtung für jede der zeitlich aufeinanderfolgenden Steuerperioden, so dass die Änderung der resultierenden Magnetkraft in der ausgewählten Steuerrichtung die Fähigkeit einer auf das Objekt wirkenden Gesamtkraft verbessert, um die Abweichung der Position zu verringern, und
- Einstellen (304) der einen oder der mehreren Spannungen für jede der zeitlich aufeinanderfolgenden Steuerperioden entsprechend der ausgewählten Steuerrichtung, um die Abweichung der Position durch Änderung der resultierenden Magnetkraft mit der einen oder den mehreren Spannungen zu verringern,

**dadurch gekennzeichnet, dass** die Steuerrichtung aus einem Satz auswählbarer Steuerrichtungen (x+, x-, y+, y-, x+/y+, x+/y-, x-/y+, x-/y-, z+, z-) ausgewählt wird, und dass für jede der einen oder mehreren Spannungen ein Spannungswert aus einem Satz auswählbarer Spannungswerte (+$U_{DC}$, 0, -$U_{DC}$) gemäß der ausgewählten Steuerrichtung ausgewählt wird.

15. Computerprogramm zum Steuern eines Magnetschwebesystems, das Computerprogramm umfassend:

- computerausführbare Anweisungen zum Steuern eines programmierbaren Verarbeitungssystems zum Steuern einer oder mehrerer Spannungen, die auf eine oder mehrere Wicklungen des Magnetschwebesystems gerichtet sind, aufgrund einer Abweichung der Position des Objekts von einer Referenzposition, um eine resultierende Magnetkraft, die auf das Objekt gerichtet ist, zu steuern,

wobei das Computerprogramm computerausführbare Anweisungen zum Steuern des programmierbaren Verarbeitungssystems umfasst, um:

- für jede der zeitlich aufeinanderfolgenden Steuerperioden eine Steuerrichtung so auszuwählen, dass die Änderung der resultierenden Magnetkraft in der ausgewählten Steuerrichtung die Fähigkeit einer auf das Objekt wirkenden Gesamtkraft verbessert, um die Abweichung der Position zu verringern, und
- für jede der zeitlich aufeinanderfolgenden Steuerperioden die eine oder die mehreren Spannungen entsprechend der ausgewählten Steuerrichtung einzustellen, um die Abweichung der Position durch Änderung der resultierenden Magnetkraft mit der einen oder den mehreren Spannungen zu verringern,

**dadurch gekennzeichnet, dass** das Computerprogramm computerausführbaren Anweisungen zum Steuern des programmierbaren Verarbeitungssystems umfasst, um:

- die Steuerrichtung aus einem Satz von auswählbaren Steuerrichtungen (x+, X-, y+, y-, x+/y+, x+/y-, x-/y+, x-/y-, z+, z-) auszuwählen, und
- für jede der einen oder mehreren Spannungen einen Spannungswert aus einem Satz auswählbarer Spannungswerte (+U$_{DC}$, 0, -U$_{DC}$) entsprechend der ausgewählten Steuerrichtung auszuwählen.

**Revendications**

1. Dispositif de commande (101,201) pour la commande d'un système de lévitation magnétique, ce dispositif de commande comprenant :

   - une entrée de signal (102,202) pour recevoir un signal de position indicatif d'une position d'un objet mis en lévitation par un ou plusieurs flux magnétiques, et
   - une commande (103,203) pour commander une ou plusieurs tensions dirigées vers un ou plusieurs enroulements du système de lévitation magnétique sur la base d'une déviation de la position de l'objet par rapport à une position de référence de manière à commander une force magnétique résultante dirigée vers l'objet,

   la commande étant conçue pour :

   - sélectionner, pour chacune des périodes de commande temporellement successives, un sens de commande tel que le changement de la force magnétique résultante dans le sens de commande sélectionné améliore l'aptitude d'une force totale agissant sur l'objet à réduire la déviation de la position, et
   - établir, pour chacune des périodes de commande temporellement successives, la ou les plusieurs tensions en fonction du sens de commande sélectionné de manière à réduire la déviation de la position en changeant la force magnétique résultante avec ou les plusieurs tensions,

   **caractérisé en ce que** la commande est conçue pour sélectionner le sens de commande parmi un ensemble de sens de commande sélectionnables (x+, x-, y+, y-, x+/y+, x+/y-, x-/y+, x-/y-, z+, z-) et pour sélectionner, pour chacune de la ou des plusieurs tensions, une valeur de tension parmi un ensemble de valeurs de tension sélectionnables (+U$_{DC}$, 0, -U$_{DC}$) en fonction du sens de commande sélectionné.

2. Dispositif de commande selon la revendication 1, dans lequel la commande est conçue pour utiliser, pour chacun d'un ou plusieurs groupes d'enroulements ne se chevauchant mutuellement pas, chacun constitué par au moins deux des enroulements et capable de générer des composants s'annulant mutuellement de la force magnétique résultante, seulement zéro tension et tension de réduction de courant en réaction à un besoin de diminution de points opératoires de courant du groupe d'enroulements considéré.

3. Dispositif de commande selon la revendication 1 ou 2, dans lequel la commande est conçue pour utiliser, pour chacun d'un ou plusieurs groupes d'enroulements ne se chevauchant mutuellement pas, chacun constitué par au moins deux des enroulements et capable de générer des composants s'annulant mutuellement de la force magnétique résultante, seulement zéro tension et tension d'augmentation de courant en réaction à un besoin d'augmentation de points opératoires de courant du groupe d'enroulements considéré.

4. Dispositif de commande selon l'une quelconque des revendications 1 à 3, dans lequel la commande est conçue pour utiliser une règle prédéterminée pour produire, sur la base de la déviation de la position, une ou plusieurs valeurs de référence pour une ou plusieurs quantités de commande définissant le fonctionnement du système de lévitation magnétique et pour soustraire, des valeurs de référence, des valeurs de référence précédentes correspondant à une période précédente parmi les périodes de commande temporellement successives de manière à produire une ou plusieurs valeurs de commande, et pour sélectionner le sens de commande sur la base de la ou des plusieurs valeurs de commande.

5. Dispositif de commande selon l'une quelconque des revendications 1 à 3, dans lequel la commande est conçue pour utiliser une règle prédéterminée pour produire, sur la base de la déviation de la position, une ou plusieurs valeurs de référence pour une ou plusieurs quantités de commande définissant le fonctionnement du système de lévitation magnétique et pour soustraire, des valeurs prédominantes indicatives de la ou des plusieurs quantités de commande de manière à produire une ou plusieurs valeurs de commande, et pour sélectionner le sens de commande sur la base de la ou des plusieurs valeurs de commande.

6. Dispositif de commande selon l'une quelconque des revendications 1 à 5, dans lequel la commande est conçue pour entretenir un modèle de correction pour corriger la sélection du sens de commande, le modèle de correction contenant des informations sur des caractéristiques de circuits magnétiques du système de lévitation magnétique et étant conçu pour recevoir des informations d'entrée indicatives du sens de commande sélectionné, les courants prédominants des enroulement, et la position de l'objet.

7. Dispositif de commande selon la revendication 4 ou 5, dans lequel la commande est conçue pour déterminer une longueur temporelle de chacune des périodes de commande temporellement successives sur la base (i) de la ou des plusieurs valeurs de commande indiquant des changements requis de la ou des plusieurs quantités de commande et (ii) d'un fait que la ou les plusieurs tensions établies pour la période de commande considérée déterminent au moins partiellement un taux de changement de chacune des une ou plusieurs quantités de commande.

8. Dispositif de commande selon la revendication 4 ou 5 ou 7, dans lequel la commande est conçue pour garder, afin de réduire la fréquence de commutation, la ou les plusieurs tensions inchangées par rapport à une ou plusieurs tensions correspondantes utilisées pendant une période précédente parmi les périodes de commande temporellement successives en réaction à une situation dans laquelle une norme de vecteur de la ou des plusieurs valeurs de commande est en dessous d'une limite prédéterminée.

9. Dispositif de commande selon l'une quelconque des revendications 1 à 8, dans lequel le signal de position constitue un vecteur de position exprimant la position de l'objet dans un système de coordonnées bidimensionnel planaire dont l'origine est à la position de référence et les sens de commande sélectionnables sont définis par des premières lignes géométriques se coupant mutuellement à l'origine dans le système de coordonnées bidimensionnel planaire, et la commande est conçue pour sélectionner l'un des sens de commande sélectionnables de manière à ce que le changement de force magnétique résultante dans le sens de commande sélectionnait améliore l'aptitude de la force totale à réduire de l'amplitude du vecteur de position.

10. Dispositif de commande selon la revendication 9, dans lequel le système de coordonnées bidimensionnel planaire est divisé en secteurs par des secondes lignes géométriques se coupant mutuellement à l'origine, de sorte que chacun des sens de commande sélectionnables appartient à l'un des secteurs et qu'une ligne de symétrie de chaque secteur est un des sens de commande sélectionnables, et la commande est conçue pour déterminer un secteur particulier parmi les secteurs auxquels un vecteur opposé du vecteur de position appartient et pour sélectionner le sens de commande qui appartient au secteur déterminé.

11. Dispositif de commande selon la revendication 9, dans lequel le système de coordonnées bidimensionnel planaire est divisé en secteurs par des secondes lignes géométriques se coupant mutuellement à l'origine, de sorte que chacun des sens de commande sélectionnables appartient à l'un des secteurs et qu'une ligne de symétrie de chaque secteur est un des sens commande sélectionnables, et la commande est conçue pour utiliser une règle prédéterminée pour produire, sur la base du vecteur de position, un vecteur de référence de quantités de commande définissant le fonctionnement du système de lévitation magnétique et pour soustraire, du vecteur de référence, un vecteur de référence précédent correspondant à une période précédente parmi les périodes de commande temporellement successives de manière à produire un vecteur de commande, et la commande est conçue pour déterminer un secteur particulier parmi les secteurs auxquels le vecteur de commande appartient et pour sélectionner le sens de commande qui appartient au secteur déterminé.

12. Dispositif de commande selon l'une quelconque des revendications 1 à 11, dans lequel la commande est conçue pour tenir un tableau de recherche de correction pour corriger la sélection du sens de commande, le tableau de recherche de correction contenant des informations sur des caractéristiques de circuits magnétiques du système de lévitation magnétique et étant conçu pour recevoir des informations d'entrée indicatives du sens de commande sélectionné, les courants prédominants des enroulements, et la position de l'objet.

13. Système de lévitation magnétique, comprenant :

   - au moins un actionneur magnétique (104, 204z+, 204z-) comprenant un ou plusieurs enroulements (105x+, 105x-, 105y+, 105y-, 205z+, 205z-) pour générer un ou plusieurs flux magnétiques pour mettre un objet en lévitation,
   - un équipement (106x+, 106x-, 106y+, 106y-, 113, 206, 213) pour générer un signal de position indicatif d'une position de l'objet par rapport à l'actionneur magnétique,
   - une ou plusieurs sources de tension contrôlables (107x+, 107x-, 107y+, 107y-, 207z+, 207z-) pour diriger une ou plusieurs tensions vers le ou les plusieurs enroulements, et
   - un dispositif de commande (101,201) selon l'une quelconque des revendications 1 à 12 pour commander là ou les plusieurs tensions sur la base d'une déviation de la position de l'objet par rapport à une position de référence de manière à commander le ou les plusieurs flux magnétiques pour mettre l'objet en lévitation.

14. Procédé de commande d'un système de lévitation magnétique, ce procédé comprenant :

- la réception (301) d'un signal de position indicatif d'une position d'un objet mis en lévitation par un ou plusieurs flux magnétiques, et
- la commande (302) d'une ou plusieurs tensions dirigées vers un ou plusieurs enroulements du système de lévitation magnétique sur la base d'une déviation de la position de l'objet par rapport à une position de référence de manière à commander une force magnétique résultante dirigée vers l'objet,

la ou les plusieurs tensions étant commandées en :

- sélectionnant (303), pour chacune des périodes de commande temporellement successives, un sens de commande tel que le changement de la force magnétique résultante dans le sens de commande sélectionné améliore l'aptitude d'une force totale agissant sur l'objet à réduire la déviation de la position, et
- établissant (304), pour chacune des périodes de commande temporellement successives, la ou les plusieurs tensions en fonction du sens de commande sélectionné de manière à diminuer la déviation de la position en changeant la force magnétique résultante avec la ou les plusieurs tensions,

**caractérisé en ce que** le sens de commande est sélectionné parmi un ensemble de sens de commande sélectionnables (x+, x-, y+, y-, x+/y+, x+/y-, x-/y+, x-/y-, z+, z-) et, pour chacune de la ou des plusieurs tensions, une valeur de tension est sélectionnée parmi un ensemble de valeurs de tension sélectionnables (+$U_{DC}$, 0, -$U_{DC}$) en fonction du sens de commande sélectionné.

15. Programme informatique pour la commande d'un système de lévitation magnétique, ce programme informatique comprenant :

- des instructions exécutables par ordinateur pour commander un système de traitement programmable afin de commander une ou plusieurs tensions dirigées vers un ou plusieurs enroulements du système de l'habitation magnétique sur la base d'une déviation d'une position d'un objet par rapport à une position de référence de l'objet de manière à commander une force magnétique résultante dirigée vers l'objet,

le programme informatique comprenant des instructions exécutables par ordinateur pour commander le système de traitement programmable afin de :

- sélectionner, pour chacune des périodes de commande temporellement successives, un sens de commande de manière à ce que le changement de la force magnétique résultante dans le sens de commande sélectionné améliore l'aptitude d'une force totale agissant sur l'objet à réduire la déviation de la position, et
- établir, pour chacune des périodes de commande temporellement successives, la ou les plusieurs tensions en fonction du sens de commande sélectionné de manière à réduire la déviation de la position en changeant la force magnétique résultante avec la ou les plusieurs tensions,

**caractérisé en ce que** le programme informatique comprend des instructions exécutables par ordinateur pour commander au système de traitement programmable de :

- sélectionner le sens de commande parmi un ensemble de sens de commande sélectionnables (x+, x-, y+, y-, x+/y+, x+/y-, x-/y+, x-/y-, z+, z-) et,
- sélectionner, pour chacune de la ou des plusieurs tensions, une valeur de tension parmi un ensemble de valeurs de tension sélectionnables (+$U_{DC}$, 0, - $U_{DC}$) en fonction du sens de commande sélectionné.

**Figure 1a**

**Figure 1b**

**Figure 1c**

**Figure 1d**

**Figure 2**

**START**

301 — Receive a position signal indicative of a position of an object.

302

303 — Select a control direction so that changing a resultant magnetic force in the selected control direction improves ability of a total force acting on the object to decrease a deviation of the position of the object.

Ⓐ

304 — Set voltage(s) in accordance with the selected control direction.

Ⓑ

Maintain the selected voltages.

NO — Does the next control period begin? — YES

**Figure 3a**

304

(A) (see figure 3a)

310

**Is there a need to decrease operating points of operating quantities of any winding group?**

YES | NO

311

Allow only current-decreasing voltages and zero voltages but not current-increasing voltages for each winding group where the operating points are to be decreased.

312

**Is there a need to increase operating points of operating quantities of any winding group?**

YES | NO

313

Allow only current-increasing voltages and zero voltages but not current-decreasing voltages for each winding group where the operating points are to be increased.

314

Set voltages in accordance with the selected control direction using the allowed voltages.

(B) (see figure 3a)

**Figure 3b**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CLAUDIUS M. ZINGERLI ; JOHANN W. KOLAR.** Novel Observer Based Force Control for Active Magnetic Bearings. *International Power Electronics Conference: IPEC-Sapporo 2010,* 2010